(19) Europäisches Patentamt
European Patent Office
Office européen des brevets

(11) **EP 4 738 685 A1**

(12) **EUROPEAN PATENT APPLICATION**
published in accordance with Art. 153(4) EPC

(43) Date of publication:
06.05.2026  Bulletin 2026/19

(21) Application number: 24830993.2

(22) Date of filing: 28.06.2024

(51) International Patent Classification (IPC):
*H02P 6/00* (2016.01)       *H02P 6/08* (2016.01)
*H02P 6/06* (2006.01)       *A01D 34/00* (2006.01)

(52) Cooperative Patent Classification (CPC):
A01D 34/00; H02P 6/00; H02P 6/06; H02P 6/08

(86) International application number:
PCT/CN2024/102419

(87) International publication number:
WO 2025/002364 (02.01.2025 Gazette 2025/01)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.06.2023  CN 202310772251
           28.06.2023  CN 202310772256
           28.06.2023  CN 202310772272
           28.06.2023  CN 202310772260

(71) Applicant: **Jiangsu Dongcheng M&E Tools Co.,
Ltd.**
**Nantong, Jiangsu 226244 (CN)**

(72) Inventor: **WANG, Haodong**
**Nantong, Jiangsu 226244 (CN)**

(74) Representative: **Winter, Brandl - Partnerschaft
mbB**
**Alois-Steinecker-Straße 22**
**85354 Freising (DE)**

(54) **ADAPTIVE CONTROL METHOD FOR ELECTRIC MOTOR LOAD, AND OUTDOOR OPERATION
VEHICLE**

(57)     The present disclosure provides an adaptive control method for a load of a motor and an outdoor working vehicle. According to the control method, by pre-storing a correspondence between an operating parameter and the load of the motor, a correspondence between the operating parameter and a performance parameter of the motor, and an upper boundary threshold and a lower boundary threshold corresponding to the load, and by comparing a matching situation between a real-time operating parameter and a load parameter, the performance parameter of the motor is adjusted through straight line fitting or curve fitting to adapt to the load. Adjusting the performance parameter of the motor includes increasing/decreasing a power of the motor, increasing/decreasing a rotating speed of the motor, increasing/decreasing a current of the motor, and increasing/decreasing a torque of the motor. In this way, a problem in the related art that an output of a mowing motor of a riding mower cannot be automatically adjusted or is inaccurately adjusted is solved, improving endurance capability of an entire riding mower.

FIG. 22

## Description

### FIELD

The present disclosure relates to an adaptive control method for a load of a motor and an outdoor working vehicle.

### BACKGROUND

Traditional mowers mainly include backpack mowers, handheld mowers, walk-behind mowers and the like, which feature a low degree of automation and low working efficiency, resulting in high labor intensity and a high degree of strain for a user. When addressing maintenance needs of year-round and large-area lawns, riding mowers offer advantages such as long endurance time, flexible operation, and high working efficiency, while avoiding fatigue and even work-related injuries caused by long-term working of the user.

Distinguished by energy power type, present riding mowers mainly include two categories: a gasoline-powered type and a lithium-ion battery-powered type. Compared with the gasoline-powered type, the lithium-ion battery-powered type has advantages such as zero emissions, zero fuel consumption, low noise, and simple maintenance.

In addition to kinetic energy consumption of driving wheels, main energy consumption of the riding mower during operation includes energy consumed by a mowing motor driving a cutting blade for mowing. Existing riding mowers generally provide the user with a plurality of adjustment gears for setting a rotating speed of the cutting blade. A higher rotating speed leads to a higher mowing efficiency, but results in a greater power and a greater energy consumption of the motor. Especially for a lithium-ion battery-powered riding mower, energy consumption of the cutting blade may affect endurance capability and a charging frequency of the riding mower.

To increase a mowing area in a single traveling path, the riding mower is generally provided with one cutting blade at each of a left side and a right side under a vehicle chassis. In actual mowing operating conditions, a load of a left cutting blade is often different from a load of a right cutting blade. If control requirements for a heavy-load cutting blade are adopted for the two cutting blades, an output torque may be excessive for a light-load cutting blade, resulting in a capacity waste; if control requirements for the light-load cutting blade are adopted for the two cutting blades, the output torque may be insufficient for the heavy-load cutting blade, and some high-density grass cannot be cut smoothly. On the other hand, in the actual mowing operating conditions, growth of grass in a to-be mowed area is not necessarily uniform, with uneven density. If a gear with a relatively high rotating speed is used continuously, the capacity waste may be caused in a sparse grass area; while if a gear with a relatively low rotating speed is used, a mowing failure may be caused in a dense grass area. When the user manually switches gears, it is necessary to continuously manually determine a grass condition and an operating condition, and adjust the gears repeatedly to achieve an optimal combination between efficiency and endurance, which has high technical difficulty and complicated operations, and is prone to safety issues due to distracting the user's attention.

Existing control methods also cannot accurately adjust parameters of the motor through load adaptive control to achieve adjustment of an energy output of the motor. In view of this, there is indeed a need to provide an improved adaptive control method for a load of a motor and an outdoor working vehicle to overcome defects existing in the prior art.

### SUMMARY

Addressing defects of the related art, an objective of the present disclosure is to provide an adaptive closed-loop control method for a load of a motor, a motor control apparatus, and a working device, to automatically adjust an output to improve endurance capability.

To solve problems in the related art, a technical solution adopted in the present disclosure is an adaptive closed-loop control method for a load of a motor. The control method is applied to a control apparatus of a mowing motor to achieve closed-loop control of a power, or closed-loop control of a rotating speed, or closed-loop control of a current, or closed-loop control of a torque.

The control method includes: acquiring a correspondence between the load and an operating parameter of the mowing motor, and acquiring an upper boundary threshold and a lower boundary threshold corresponding to the load; collecting the operating parameter of the motor; identifying the load of the motor based on the operating parameter of the motor; and based on the correspondence between the load and the operating parameter, increasing a performance parameter of the motor in response to the operating parameter being greater than the upper boundary threshold corresponding to the load, and decreasing the performance parameter of the motor in response to the operating parameter being smaller than the lower boundary threshold corresponding to the load.

Optionally, the operating parameter of the motor includes at least one of a duty ratio, a rotating speed, a current, or a power. The selected operating parameter may be one, a plurality, or all of the above-described parameters.

Optionally, the performance parameter of the motor includes at least one of a rotating speed, a current, a power, or a torque. Increasing or decreasing the performance parameter of the motor includes: increasing or decreasing the power of the motor, increasing or decreasing the rotating speed of the motor, increasing or decreasing the current of the motor, and increasing or decreasing the torque of the motor.

Optionally, the correspondence between the load and the operating parameter of the motor includes a target control track curve.

In one embodiment, the target control track curve includes a track curve of the rotating speed varying with at least one of the duty ratio, the current or the power.

In one embodiment, the target control track curve includes a track curve of the current varying with at least one of the duty ratio or the rotating speed.

In one embodiment, the target control track curve includes a track curve of the power varying with at least one of the duty ratio or the rotating speed.

In one embodiment, the target control track curve includes a track curve of the torque varying with at least one of the duty ratio or the rotating speed.

Optionally, in a process of acquiring the target control track curve of the correspondence between the load and the operating parameter of the motor, data is measured by using an open-loop pulse width modulation (PWM) control method when the operating parameter only includes the duty ratio.

Optionally, in a process of acquiring the target control track curve of the correspondence between the load and the operating parameter of the motor, data is measured by using a closed-loop control method when the operating parameter includes at least one of the rotating speed, the current or the power.

In an embodiment, during a process of increasing/decreasing the performance parameter of the motor, at least one of the operating parameter of the motor is controlled to move to a target point on the target control track curve by means of straight line fitting or curve fitting, to achieve target track curve control of the motor.

In an embodiment, prior to adjusting the performance parameter based on the correspondence between the load and the operating parameter, a correspondence between the performance parameter and the operating parameter of the mowing motor is acquired.

To solve the problems in the related art, the present disclosure further provides an outdoor working vehicle. As a riding mower, the outdoor working vehicle includes: a vehicle frame; a working mechanism attached to the vehicle frame, the working mechanism including a working motor and an output assembly configured to be driven by the working motor to perform a specific functional operation, the working mechanism being a mowing mechanism, and the working motor being a mowing motor; and a controller assembly configured to control an operation state of the working motor. The working motor has a plurality of operating parameters, and the controller assembly has a plurality of control strategies for the working motor, the plurality of control strategies correspondingly matching the plurality of operating parameters. The controller assembly includes a collection unit, an identification unit, a storage unit and a control unit. The collection unit is configured to collect at least one of the operating parameters of the working motor during operation of the working motor. The identification unit is configured to identify a load condition of the working motor based on the collected operating parameter. The storage unit is configured to pre-store a correspondence between the operating parameters of the working motor and a load change and pre-store an upper boundary threshold and a lower boundary threshold of the operating parameter corresponding to a load. The control unit is configured to determine whether a detected actual load matches an actual operating parameter of the working motor based on the correspondence stored in the storage unit, and adjust performance parameters of the working motor by using a matched control strategy, in response to the actual operating parameter not falling within a range formed by a preset upper boundary threshold and a preset lower boundary threshold of the operating parameter corresponding to the actual load.

The plurality of operating parameters of the working motor include a duty ratio parameter, a rotating speed parameter, a current parameter, and a power parameter.

The performance parameters of the working motor include a rotating speed parameter, a current parameter, a power parameter, and a torque parameter.

The matched control strategy of the working motor includes a rotating speed closed-loop control strategy, a current closed-loop control strategy, a power closed-loop control strategy, a torque closed-loop control strategy and a PWM duty ratio open-loop control strategy.

The storage unit is further configured to store a correspondence between the performance parameters and the operating parameters of the working motor.

The correspondence between the performance parameters and the operating parameters of the working motor includes a correspondence between the rotating speed and the duty ratio, a correspondence between the rotating speed and the current, and a correspondence between the rotating speed and the power.

The correspondence between the performance parameters and the operating parameters of the working motor includes a correspondence between the current and the duty ratio and a correspondence between the current and the rotating speed.

The correspondence between the performance parameters and the operating parameters of the working motor includes a correspondence between the power and the duty ratio and a correspondence between the power and the rotating speed.

The correspondence between the performance parameters and the operating parameters of the working motor includes a correspondence between the torque and the duty ratio and a correspondence between the torque and the rotating speed.

Rotating speed points or torque points, and/or current points or torque points, and/or power points or torque points under different operating parameter states are selected for straight line fitting or curve fitting.

Current points or torque points, and/or rotating speed points or rotating speed points under different operating parameter states are selected for straight line fitting or curve fitting.

Power points or torque points, and/or rotating speed points or torque points under different operating parameter states are selected for straight line fitting or curve fitting.

Rotating speed points or torque points, and/or power points or torque points under different operating parameter states are selected for straight line fitting or curve fitting.

The control unit is configured to increase the performance parameter of the working motor in response to determining that the actual operating parameter is greater than the upper boundary threshold corresponding to the load.

The control unit is configured to decrease the performance parameter of the working motor in response to determining that the actual operating parameter is smaller than the lower boundary threshold corresponding to the load.

The control unit is configured to, prior to determining whether the actual operating parameter falls within the range formed by the preset upper boundary threshold and the preset lower boundary threshold of the operating parameter corresponding to the actual load, determine whether the working motor is currently in a rotating speed adjusting process.

The control unit is configured to adjust the rotating speed by Proportional, Integral, Derivative Control (PID), in response to determining that the working motor is in the rotating speed adjusting process.

The control unit is configured to determine an upper boundary and a lower boundary of the operating parameter of the working motor by linear interpolation calculation or direct function calculation after looking up a table according to a present performance parameter of the working motor, in response to determining that the working motor is not in the rotating speed adjusting process.

Compared with the related art, the present disclosure has the following beneficial effects: According to the adaptive closed-loop control method for the load of the motor in the present disclosure, an actual condition of the load is identified by collecting relevant parameters when the mowing motor is in operation, in such a manner that a low power and a low rotating speed output under a low load, and a high power and a high rotating speed output under a high load are achieved, enabling motor control and output adjustment to be more accurate. Thus, an effect of reducing invalid energy consumption and improving endurance capability of an entire mower is achieved. This control method requires no manual intervention, and correspondingly, the mower features a high degree of intelligence, easy operation, and excellent safety performance.

## BRIEF DESCRIPTION OF THE DRAWINGS

Specific embodiments of the present disclosure are described in detail below in conjunction with the accompanying drawings.

FIG. 1 is a flowchart of an adaptive rotating speed closed-loop control method for a load of a motor according to Embodiment 1 of the present disclosure.

FIG. 2 is a first optimal track curve of an actual rotating speed varying with a duty ratio according to Embodiment 1 of the present disclosure.

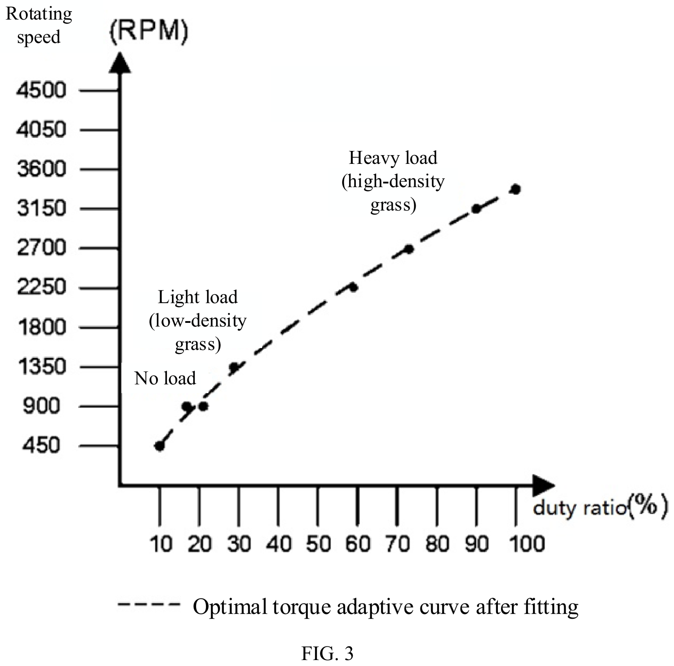

FIG. 3 is a second optimal track curve of an actual rotating speed varying with a duty ratio according to Embodiment 1 of the present disclosure.

FIG. 4 is a schematic diagram of rotating speed closed-loop control according to Embodiment 1 of the present disclosure.

FIG. 5 is an optimal track curve of an actual rotating speed varying with a current according to Embodiment 1 of the present disclosure.

FIG. 6 is an optimal track curve of an actual rotating speed varying with a power according to Embodiment 1 of the present disclosure.

FIG. 7 is a flowchart of an adaptive current closed-loop control method for a load of a motor according to Embodiment 2 of the present disclosure.

FIG. 8 is an optimal track curve of an actual current varying with a duty ratio according to Embodiment 2 of the present disclosure.

FIG. 9 is an optimal track curve of an actual current varying with a rotating speed according to Embodiment 2 of the present disclosure.

FIG. 10 is a schematic diagram of rotating speed closed-loop control according to Embodiment 2 of the present disclosure.

FIG. 11 is a flowchart of an adaptive power closed-loop control method for a load of a motor according to Embodiment 3 of the present disclosure.

FIG. 12 is an optimal track curve of an actual power varying with a duty ratio according to Embodiment 3 of the present disclosure.

FIG. 13 is an optimal track curve of an actual power varying with a rotating speed according to Embodiment 3 of the present disclosure.

FIG. 14 is a schematic diagram of power closed-loop control according to Embodiment 3 of the present disclosure.

FIG. 15 is a flowchart of an adaptive torque closed-loop control method for a load of a motor according to Embodiment 4 of the present disclosure.

FIG. 16 is a torque-duty ratio curve according to Embodiment 4 of the present disclosure.

FIG. 17 is an optimal track curve of an actual torque varying with a duty ratio according to Embodiment 4 of the present disclosure.

FIG. 18 is a torque-rotating speed efficiency MAP according to Embodiment 4 of the present disclosure.

FIG. 19 is an optimal track curve of an actual torque varying with a rotating speed according to Embodiment 4 of the present disclosure.

FIG. 20 is a flowchart of an adaptive control method for a load of a motor according to an embodiment of the present disclosure.

FIG. 21 is a schematic structural diagram of a controller assembly of an outdoor working vehicle according to Embodiment 5 of the present disclosure.

FIG. 22 is a schematic structural view of an outdoor working vehicle according to Embodiment 5 of the present disclosure.

FIG. 23 is a schematic structural view of an outdoor working vehicle according to Embodiment 5 of the present disclosure.

## DETAILED DESCRIPTION OF THE EMBODIMENTS

The present disclosure is described in further detail below in conjunction with the accompanying drawings and embodiments.

Terms used in the present disclosure are only for a purpose of describing specific embodiments, and are not intended to limit the present disclosure. For example, terms such as "first", "second", and "third" described below are merely for the convenience of distinguishing and describing relevant parameters involved in the present disclosure, have no special meanings, and thus shall not be construed as limiting the present disclosure.

## Embodiment 1

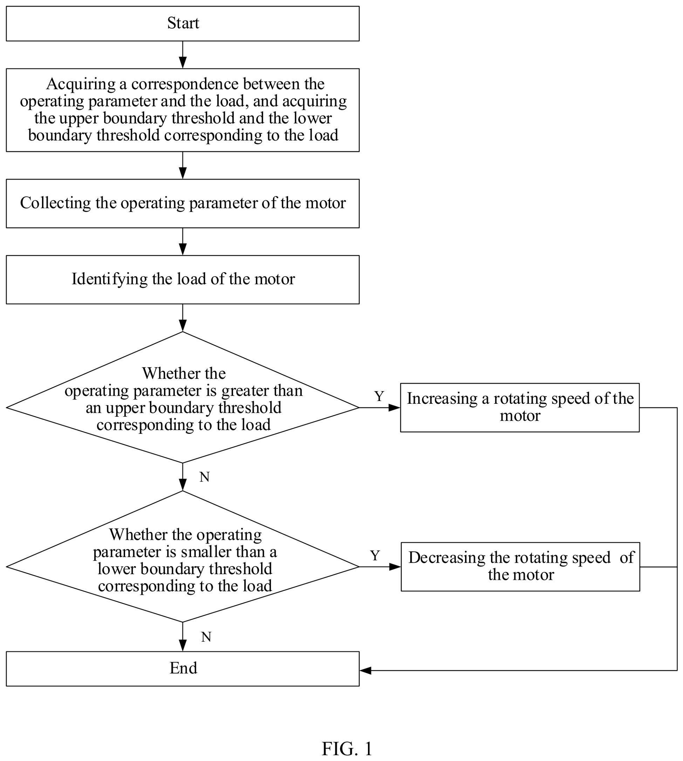

Addressing deficiencies of the related art, Embodiment 1 provides an adaptive rotating speed closed-loop control method for a load of a motor. The control method is applied to a motor control apparatus to automatically adjust an output, in such a manner that endurance capability is improved. As illustrated in FIG. 1, the method includes: collecting an operating parameter of the motor; identifying the load of the motor based on the operating parameter of the motor; based on a correspondence between the load and the operating parameter, that is, finally determining based on relationship coordinates of the operating parameter varying with the load; and based on the relationship coordinates between the load and the operating parameter, determination results including: increasing a rotating speed of the motor in response to the operating parameter being greater than an upper boundary threshold corresponding to the load, and decreasing the rotating speed of the motor in response to the operating parameter being smaller than a lower boundary threshold corresponding to the load.

An operation of collecting the operating parameter of the motor is used to acquire an operating condition of the motor in real time, the operating condition includes a duty ratio, a current, a power and the like of the motor. An operation of identifying the load of the motor is used to acquire a load condition of the motor in real time, the load condition includes a high load, a low load, load changes and the like. The control method of this embodiment further includes, prior to the operation of collecting the operating parameter of the motor: acquiring the correspondence between the load and the operating parameter, that is, acquiring the relationship coordinates of the operating parameter varying with the load; and acquiring the upper boundary threshold and the lower boundary threshold corresponding to the load, including acquiring an upper boundary threshold and a lower boundary threshold corresponding to the load subsequent to the operating parameter varying with the load.

With regard to an operation of acquiring the correspondence between the load and the operating parameter, and acquiring the upper boundary threshold and the lower boundary threshold corresponding to the load, this operation is performed prior to operation of the motor. The relationship coordinates and the boundary thresholds can be obtained through testing and calculation in a laboratory and pre-inputted into a control chip of the motor. With regard to the operations of collecting the operating parameter of the motor, identifying the load of the motor, and determining based on the relationship coordinates of the operating parameter varying with the load, the above-described operations are performed during the operation of the motor. The operating parameter, the load condition, and a determination process are performed in real time, to provide a real-time feedback and control the operation of the motor. In an embodiment, the operation of the motor refers to the motor driving a cutting blade to mow grass. Based on inherent parameters and operating conditions of the motor, during the operation, determination is made based on the relationship coordinates between the operating parameter and the load. The motor is controlled in real time to increase or decrease the rotating speed, in such a manner that automatic adjustment of an output of a mowing motor is achieved to improve endurance capability of a mower.

According to the adaptive rotating speed closed-loop control method for the load of the motor in the present disclosure, an actual condition of the load is identified by collecting relevant parameters when the mowing motor is in operation, in such a manner that a low power and a low rotating speed output under a low load, and a high power and a high rotating speed output under a high load are achieved, enabling motor control and output adjustment to be more accurate. Thus, an effect of reducing invalid energy consumption and improving endurance capability of an entire mower is achieved. This control method requires no manual intervention, and correspondingly, the mower features a high degree of intelligence, easy operation, and excellent safety performance.

Preferably, the operating parameter includes the duty ratio or the current or the power, or the operating parameter includes all of the duty ratio, the current and the power.

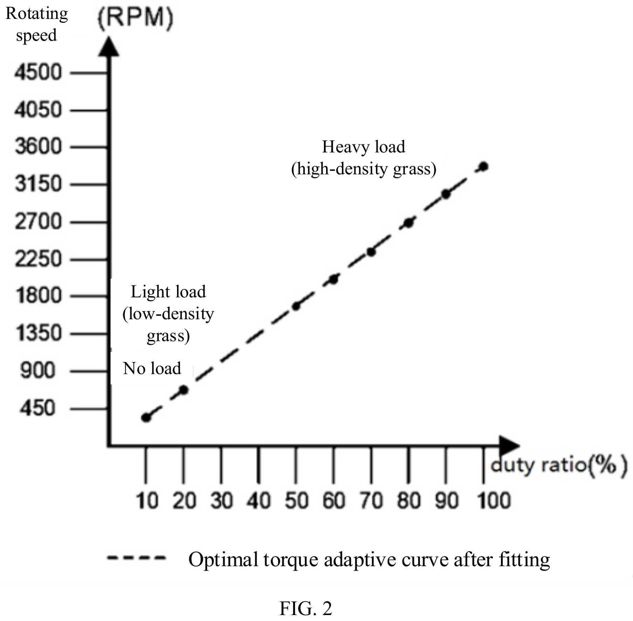

Preferably, to acquire an optimal track curve of an actual rotating speed varying with the duty ratio illustrated in FIG. 2, that is, when the operating parameter includes or only includes the duty ratio, in an operation of acquiring the relationship coordinates of the operating parameter varying with the load and acquiring the upper boundary threshold and the lower boundary threshold corresponding to the load subsequent to the operating parameter varying with the load, data is measured by using an open-loop pulse width modulation (PWM) control method, which includes: step 10: presetting a duty ratio $d_0\%$ of the motor, and acquiring a rotating speed characteristic curve corresponding to the motor; step 20: presetting a duty ratio $d_1\%$ and a duty ratio variable $\Delta d$ of the motor, and acquiring a rotating speed characteristic curve corresponding to the motor, where $d_1=d_0+\Delta d$; step 30: repeating step 20 until the duty ratio of the motor reaches 100%, and acquiring rotating speed characteristic curves corresponding to the motor under all preset duty ratios; step 40: mapping rotating speed-torque characteristic curves under different duty ratio states to a rotating speed-duty ratio coordinate system; and step 50: selecting rotating speed points or torque points under the different duty ratio states (selection principle: maximum efficiency points, minimum current points and the like), matching a torque required by the motor with the rotating speed (for example, matching a maximum torque with a maximum rotating speed, and matching a minimum torque with a minimum rotating speed) to anchor two ends of an optimal control track and perform straight line fitting or curve fitting, and obtaining a required adaptive control track of the load. The above-described $\Delta d$ may be adjusted based on actual product requirements, measurement accuracy, main control chip resources and the like. A smaller value leads to a more refined curve fitting and a smoother transition of the control track, but results in a greater resource consumption.

Preferably, to acquire the optimal track curve of the actual rotating speed varying with the duty ratio illustrated in FIG. 2, when the operating parameter includes or only includes the duty ratio, in the operation of acquiring the relationship coordinates of the operating parameter varying with the load and acquiring the upper boundary threshold and the lower boundary threshold corresponding to the load subsequent to the operating parameter varying with the load, data is measured by using a rotating speed closed-loop control method, which includes: step 10: presetting a rotating speed $n_0\%$ of the motor, acquiring a rotating speed characteristic curve corresponding to the motor, and recording duty ratios under different torque scales; step 20: presetting a rotating speed $n_1\%$ and a rotating speed variable $\Delta n$ of the motor, and acquiring a rotating speed characteristic curve corresponding to the motor, where $n_1=n_0+\Delta n$; step 30: repeating step 20 until the rotating speed of the motor reaches a maximum rotating speed for a no-load state, and acquiring rotating speed characteristic curves corresponding to the motor under all preset rotating speeds;

step 40: mapping rotating speed-torque characteristic curves under different rotating speed states to a rotating speed-duty ratio coordinate system; and step 50: selecting the rotating speed points or the torque points under the different duty ratio states (the selection principle: the maximum efficiency points, the minimum current points and the like), matching the torque required by the motor with the rotating speed (for example, matching the maximum torque with the maximum rotating speed, and matching the minimum torque with the minimum rotating speed) to anchor the two ends of the optimal control track and perform the straight line fitting or the curve fitting, and obtaining the required adaptive control track of the load. The above-described $\Delta n$ may be adjusted based on the actual product requirements, the measurement accuracy, the main control chip resources and the like. A smaller value leads to a more refined curve fitting and a smoother transition of the control track, but results in a greater resource consumption.

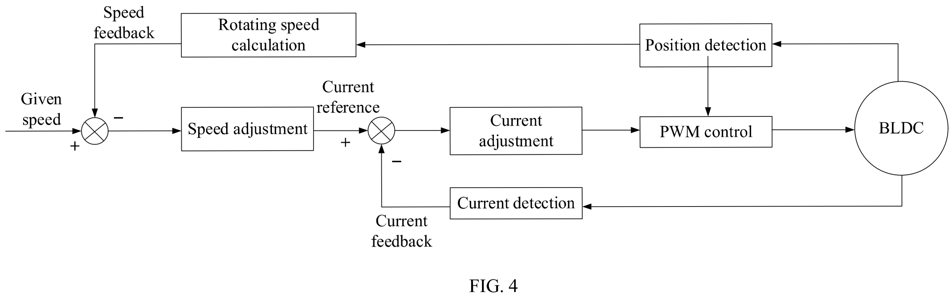

Referring to the principle of rotating speed closed-loop control illustrated in FIG. 4, this embodiment controls an operation of a brushless direct current motor (BLDC) through a speed feedback closed-loop.

Preferably, when the operating parameter includes or only includes the duty ratio, during an actual operation of the mowing motor, the above-described control method is implemented by: initially detecting the rotating speed of the motor and acquiring a present duty ratio; subsequently preprocessing the rotating speed; determining whether the motor is currently in a rotating speed adjustment process, adjusting a present rotating speed by Proportional, Integral, Derivative Control (PID) and returning to an initial stage in response to determining that the motor is currently in the rotating speed adjustment process, and determining an upper boundary and a lower boundary (corresponding to a load increase and a load decrease) corresponding to the duty ratio based on the present rotating speed (by linear interpolation calculation or direct function calculation after looking up a table) and proceeding to the next operation in response to determining that the motor is not currently in the rotating speed adjustment process; determining whether the duty ratio is greater than the upper boundary corresponding to the load increase (the load becomes greater), setting a new target rotating speed, that is, increasing the rotating speed, and returning to the initial stage in response to determining that the duty ratio is greater than the upper boundary corresponding to the load increase, and proceeding to the next operation in response to determining that the duty ratio is not greater than the upper boundary corresponding to the load increase; and determining whether the duty ratio is smaller than the lower boundary corresponding to the load decrease (the load becomes smaller), setting a new target rotating speed, that is decreasing the rotating speed, and returning to the initial stage in response to the determining that the duty ratio is smaller than the lower boundary corresponding to the load decrease.

Regarding the method for acquiring the above-described optimal control track, an optimal track curve can be fitted by a mathematical tool (such as Matlab). In a process of software control, a present rotating speed and a duty ratio of the mowing motor are obtained in real time, and a shortest distance between a present measurement point and a curve is calculated, and a point on the curve (target point, a straight line distance from this point to a measurement point is the shortest) is obtained. The present duty ratio and the rotating speed are moved to the target point along this straight line (which is actually a linear function), and optimal track curve control of the mowing motor is realized. If calculation of a distance from the above-described point to the curve takes up too much CPU resources, the following simplified approximate calculation method can also be adopted: identifying the two nearest test points on the optimal track curve corresponding to a point $(x_0, y_0)$, and a straight line $Ax+By+C=0$ is derived from these two test points.

A distance from the point to the straight line is

$$d = \frac{|Ax_0 + By_0 + C|}{\sqrt{A^2 + B^2}}$$

From a macroscopic perspective, the rotating speed and the torque of the mowing motor are continuously operated along an optimal track (with fluctuations at a microscopic level), where a small load leads to a low rotating speed and a large load leads to a high rotating speed.

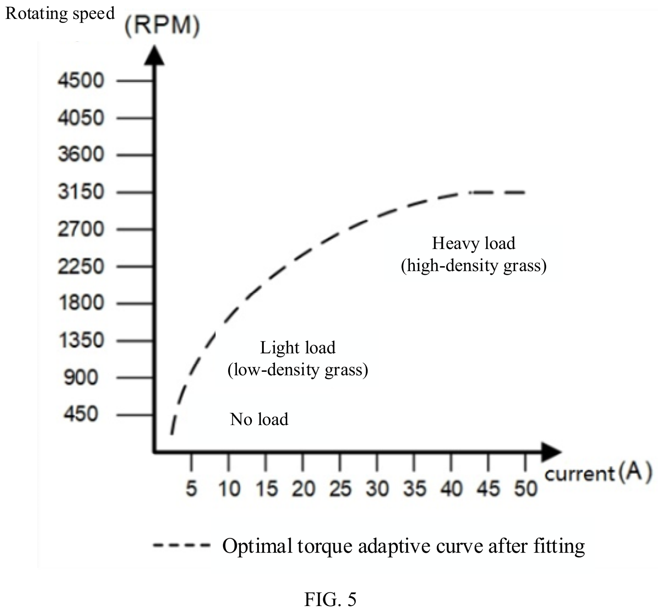

Preferably, to acquire an optimal track curve of the actual rotating speed varying with the current illustrated in FIG. 5, that is, when the operating parameter includes or only includes the current, in the operation of acquiring the relationship coordinates of the operating parameter varying with the load and acquiring the upper boundary threshold and the lower boundary threshold corresponding to the load subsequent to the operating parameter varying with the load, the data is measured by using the rotating speed closed-loop control method, which includes: step 10: presetting a duty ratio $n_0\%$ of the motor, and acquiring a rotating speed-torque characteristic curve and a current-torque characteristic curve corresponding to the motor; step 20: presetting a rotating speed $n_1\%$ and a rotating speed variable $\Delta n$ of the motor, and acquiring a rotating speed-torque characteristic curve and a current-torque characteristic curve corresponding to the motor, where $n_1 = n_0 + \Delta n$; step 30: repeating step 20 until the rotating speed of the motor reaches the maximum rotating speed for the no-load state, and acquiring rotating speed-torque characteristic curves and current-torque characteristic curves corresponding to the motor under all preset rotating speeds; step 40: mapping rotating speed-torque characteristic curves and current-torque characteristic curves under different rotating speed states to a rotating speed-current coordinate system; and step 50: selecting rotating speed points or torque points, and current points or torque points (the selection principle: the maximum efficiency points, maximum torque per ampere (MTPA) points and the like), matching a maximum torque required by the motor with a maximum rotating speed and a maximum current, and matching a minimum torque with a minimum rotating speed and a minimum current, to anchor the two ends of the optimal control track and perform the straight line fitting or the curve fitting, and obtaining the required adaptive control track of the load. The above-described $\Delta n$ may be adjusted based on the actual product requirements, the measurement accuracy, the main control chip resources and the like. A smaller value leads to a more refined curve fitting and a smoother transition of the control track, but results in a greater resource consumption.

Preferably, when the operating parameter includes or only includes the current, during the actual operation of the mowing motor, the above-described control method is implemented by: initially detecting the rotating speed and the current of the motor; subsequently preprocessing the rotating speed and the current; determining whether the motor is currently in the rotating speed adjustment process, adjusting the actual rotating speed by Proportional, Integral, Derivative Control (PID) and returning to the initial stage in response to determining that the motor is currently in the rotating speed adjustment process, and determining an upper boundary and a lower boundary (corresponding to the load increase and the load decrease) corresponding to an operating current based on the present rotating speed (by linear interpolation calculation or direct function calculation after looking up a table) and proceeding to the next operation in response to determining that the motor is not currently in the rotating speed adjustment process; determining whether the current is greater than the upper boundary corresponding to the load increase (the load becomes greater), setting a new target rotating speed, that is, increasing the rotating speed, and returning to the initial stage in response to determining that the current is greater than the upper boundary corresponding to the load increase, and proceeding to the next operation in response to determining that the current is not greater than the upper boundary corresponding to the load increase; and determining whether the current is smaller than the lower boundary threshold corresponding to the load decrease (the load becomes smaller), setting a new target rotating speed, that is decreasing the rotating speed, and returning to the initial stage in response to the determining that the current is smaller than the lower boundary threshold corresponding to the load decrease.

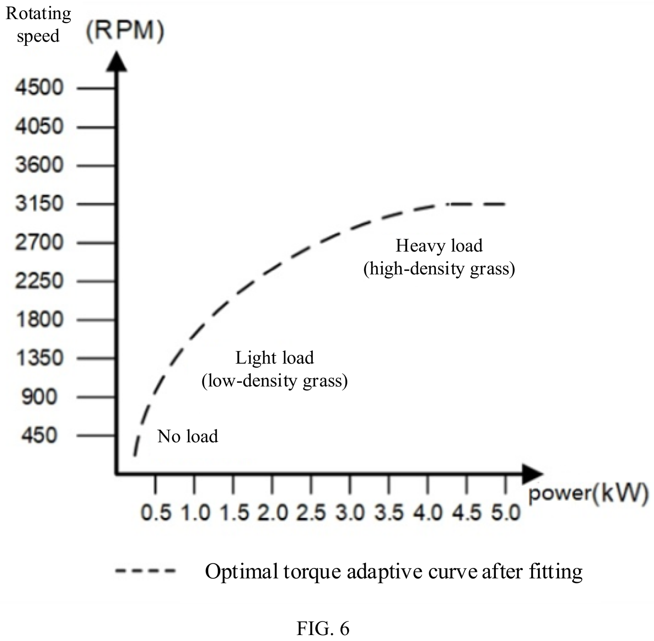

Preferably, acquire an optimal track curve of the actual rotating speed varying with the power illustrated in FIG. 6, that is, when the operating parameter includes or only includes the power, in the operation of acquiring the relationship coordinates of the operating parameter varying with the load and acquiring the upper boundary threshold and the lower boundary threshold corresponding to the load subsequent to the operating parameter varying with the load, the data is measured by using the rotating speed closed-loop control method, which includes: step 10: presetting a rotating speed $n_0\%$ of the motor, and acquiring a rotating speed-torque characteristic curve and a power-torque characteristic curve corresponding to the motor; step 20: presetting a rotating speed $n_1\%$ and a rotating speed variable $\Delta n$ of the motor, and acquiring a rotating speed-torque characteristic curve and a power-torque characteristic curve corresponding to the motor, where $n_1=n_0+\Delta n$; step 30: repeating step 20 until the rotating speed of the motor reaches the maximum rotating speed for the no-load state, and acquiring rotating speed-torque characteristic curves and power-torque characteristic curves corresponding to the motor under all preset rotating speeds; step 40: mapping rotating speed-torque characteristic curves and power-torque characteristic curves under different rotating speed states to a rotating speed-power coordinate system; and step 50: selecting rotating speed points or torque points, and power points or torque points (the selection principle: the maximum efficiency points, maximum torque per power (MTPP) points and the like), matching a maximum torque required by the motor with a maximum rotating speed and a maximum power, and matching a minimum torque with a minimum rotating speed and a minimum power, to anchor the two ends of the optimal control track and perform the straight line fitting or the curve fitting, and obtaining the required adaptive control track of the load. The above-described $\Delta n$ may be adjusted based on the actual product requirements, the measurement accuracy, the main control chip resources and the like. A smaller value leads to a more refined curve fitting and a smoother transition of the control track, but results in a greater resource consumption.

Preferably, when the operating parameter includes or only includes the power, during the actual operation of the mowing motor, the above-described control method is implemented by: initially detecting the rotating speed and the power of the motor; subsequently preprocessing the rotating speed and the power; determining whether the motor is currently in the rotating speed adjustment process, adjusting the actual rotating speed by Proportional, Integral, Derivative Control (PID) and returning to the initial stage in response to determining that the motor is currently in the rotating speed adjustment process, and determining an upper boundary and a lower boundary (corresponding to the load increase and the load decrease) corresponding to an operating power based on the present rotating speed (by linear interpolation calculation or direct function calculation after looking up a table) and proceeding to the next operation in response to determining that the motor is not currently in the rotating speed adjustment process; determining whether the power is greater than the upper boundary corresponding to the load increase (the load becomes greater), setting a new target rotating speed, that is, increasing the rotating speed, and returning to the initial stage in response to determining that the power is greater than the upper boundary corresponding to the load increase, and proceeding to the next operation in response to determining that the power is not greater than the upper boundary corresponding to the load increase; and determining whether the power is smaller than the lower boundary corresponding to the load decrease (the load becomes smaller), setting a new target rotating speed, that is decreasing the rotating speed, and returning to the initial stage in response to the determining that the power is smaller than the lower boundary corresponding to the load decrease.

Preferably, when the operating parameter includes all of the duty ratio, the current, and the power, the three dimensions are integrated and correlated based on the above-described method associated with the operating parameter including the duty ratio or the current or the power, in such a manner that adjustment of the target rotating speed is based on the upper boundary threshold and lower boundary threshold corresponding to the duty ratio and/or the current and/or the power. During the actual operation of the mowing motor, the control method is implemented by: detecting variables such as the rotating speed, the current, a voltage, a voltage difference, and a freewheeling time of the motor; subsequently preprocessing the above-described variables; determining whether the motor is currently in the rotating speed adjustment process, adjusting the actual rotating speed by Proportional, Integral, Derivative Control (PID) and returning to the initial stage in response to determining that the motor is currently in the rotating speed adjustment process, and determining upper boundaries and lower boundaries (corresponding to the load increase and load decrease) (based on the voltage, the voltage difference, and the freewheeling time) corresponding to the duty ratio, the current, and the power based on the present rotating speed (by linear interpolation calculation or direct function calculation after looking up a table) and proceeding to the next operation in response to determining that the motor is not currently in the rotating speed adjustment process; determining whether the duty ratio is greater than the upper boundary corresponding to the load increase and/or whether the current is greater than the upper boundary corresponding to the load increase and/or whether the power is greater than the upper boundary corresponding to the load increase (the load becomes greater), setting a new target rotating speed, that is increasing the rotating speed, and returning to the initial stage in response to determining that the duty ratio is greater than the upper boundary corresponding to the load increase and/or the current is greater than the upper boundary corresponding to the load increase and/or the power is greater than the upper boundary corresponding to the load increase (the load becomes greater), and proceeding to the next operation in response to determining that the duty ratio is not greater than the upper boundary corresponding to the load increase and the current is not greater than the upper boundary corresponding to the load increase and the power is not greater than the upper boundary corresponding to the load increase (the load becomes greater); determining whether the duty ratio is smaller than the lower boundary corresponding to the load decrease and/or whether the current is smaller than the lower boundary corresponding to the load decrease and/or whether the power is smaller than the lower boundary corresponding to the load decrease (the load becomes smaller), setting a new target rotating speed, that is, decreasing the rotating speed, and returning to the initial stage in response to determining that the duty ratio is smaller than the lower boundary corresponding to the load decrease and/or the current is smaller than the lower boundary corresponding to the load decrease and/or the power is smaller than the lower boundary corresponding to the load decrease.

**Embodiment 2**

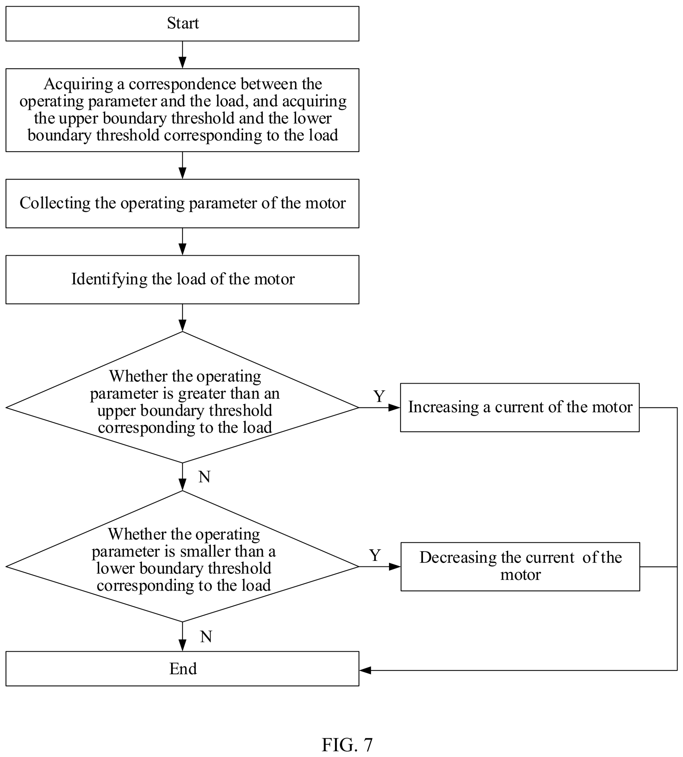

Addressing the deficiencies of the related art, Embodiment 2 provides an adaptive current closed-loop control method for a load of a motor. The control method is applied to the motor control apparatus to automatically adjust the output, in such a manner that the endurance capability is improved. As illustrated in FIG. 7, the method includes: collecting the operating parameter of the motor, the operating parameter including the duty ratio and/or the rotating speed, that is, there being three feasible manners of the operating parameter: only including the duty ratio, only including the rotating speed, and including both the duty ratio and rotating speed; identifying the load of the motor based on the operating parameter of the motor; and based on the correspondence between the load and the operating parameter, that is, finally determining based on the relationship coordinates of the operating parameter varying with the load. Based on the relationship coordinates between the load and the operating parameter, determination results includes: increasing the current of the motor in response to the operating parameter being greater than an upper boundary threshold corresponding to the increased load, and decreasing the current of the motor in response to the operating parameter being smaller than a lower boundary threshold corresponding to the decreased load.

An operation of collecting the operating parameter of the motor is used to acquire the operating condition of the motor in real time, the operating condition including the duty ratio, the current, the power and the like of the motor. An operation of identifying the load of the motor is used to acquire the load condition of the motor in real time, the load condition including the high load, the low load, the load changes and the like. The control method of this embodiment further includes, prior to the operation of collecting the operating parameter of the motor: acquiring the correspondence between the load and the operating parameter, that is, acquiring the relationship coordinates of the operating parameter varying with the load; and acquiring the upper boundary threshold and the lower boundary threshold corresponding to the load, including the upper boundary threshold and the lower boundary threshold corresponding to the load subsequent to the operating parameter varying with the load.

With regard to an operation of acquiring the correspondence between the load and the operating parameter, and acquiring the upper boundary threshold and the lower boundary threshold corresponding to the load, this operation is performed prior to the operation of the motor. The relationship coordinates and the boundary thresholds can be obtained through the testing and calculation in the laboratory and inputted into the control chip of the motor. With regard to the operations of collecting the operating parameter of the motor, identifying the load of the motor, and determining based on the relationship coordinates of the operating parameter varying with the load, the above-described operations are performed during the operation of the motor. The operating parameter, the load condition, and the determination process are performed in real time, to provide the real-time feedback and control the operation of the motor. In an embodiment, the operation of the motor refers to the motor driving the cutting blade to mow grass. Based on the inherent parameters and the operating conditions of the motor, during the operation, the determination is made based on the relationship coordinates between the operating parameter and the load. The motor is controlled in real time to increase or decrease the current, in such a manner that the automatic adjustment of the output of the mowing motor is achieved to improve the endurance capability of the mower.

According to the adaptive current closed-loop control method for the load of the motor in the present disclosure, the actual condition of the load is identified by collecting the relevant parameters when the mowing motor is in operation, in such a manner that the low power and the low rotating speed output under the low load, and the high power and the high rotating speed output under the high load are achieved, enabling the motor control and output adjustment to be more accurate. Thus, the effect of reducing the invalid energy consumption and improving the endurance capability of the entire mower is achieved. This control method requires no manual intervention, and correspondingly, the mower features the high degree of intelligence, the easy operation, and the excellent safety performance.

Preferably, when the operating parameter includes or only includes the duty ratio, the adaptive current closed-loop control method for the load of the motor includes: step 10: acquiring a correspondence between the duty ratio and the load, and acquiring the upper boundary threshold and the lower boundary threshold corresponding to the load; step 20: collecting the operating parameter of the motor, where the collecting the operating parameter of the motor includes detecting a present current and acquiring a present duty ratio; step 30: preprocessing the current, and identifying the load of the motor based on the duty ratio; step 40, determining whether the motor is currently in a current adjustment process, adjusting the current by Proportional, Integral, Derivative Control (PID) and returning to step 20 in response to determining that the motor is currently in the current adjustment process, and determining an upper boundary threshold and a lower boundary threshold (the load increase and the load decrease) corresponding to the duty ratio based on the present current (by linear interpolation calculation or direct function calculation after looking up a table) and proceeding to step 50 in response to determining that the motor is not currently in the current adjustment process; step 50: determining whether the duty ratio is greater than the upper boundary threshold corresponding to the load (the load becomes greater) based on the correspondence between the duty ratio and the load, setting a new target current, that is, increasing the current of the motor, and returning to step 20 in response to determining that the duty ratio is greater than the upper boundary threshold corresponding to the load, and proceeding to step 60 in response to determining that the duty ratio is not greater than the upper boundary threshold corresponding to the load; and step 60: determining whether the duty ratio is smaller than the lower boundary threshold corresponding to the load (the load becomes smaller), setting a new target current, that is, decreasing the current of the motor, and returning to step 20 in response to determining that the duty ratio is smaller than the lower boundary threshold corresponding to the load, and returning to step 20 in response to determining that the duty ratio is not smaller than the lower boundary threshold corresponding to the load.

Preferably, when the operating parameter includes or only includes the rotating speed, the control method includes: step 10: acquiring a correspondence between the rotating speed and the load, and acquiring the upper boundary threshold and the lower boundary threshold corresponding to the load; step 20: collecting the operating parameter of the motor, where the collecting the operating parameter of the motor includes detecting the present current and the rotating speed; step 30: preprocessing the current and the rotating speed, and identifying the load of the motor based on the rotating speed; step 40, determining whether the motor is currently in the current adjustment process, adjusting the current by PID and returning to step 20 in response to determining that the motor is currently in the current adjustment process, and determining an upper boundary threshold and a lower boundary threshold corresponding to the rotating speed based on the present current and proceeding to step 50 in response to determining that the motor is not currently in the current adjustment process; step 50: determining whether the rotating speed is greater than the upper boundary threshold corresponding to the load based on the correspondence between the rotating speed and the load, increasing the current of the motor and returning to step 20 in response to determining that the rotating speed is greater than the upper boundary threshold corresponding to the load, and proceeding to step 60 in response to determining that the rotating speed is not greater than the upper boundary threshold corresponding to the load; and step 60: determining whether the rotating speed is smaller than the lower boundary threshold corresponding to the load, decreasing the current of the motor and returning to step 20 in response to determining that the rotating speed is smaller than the lower boundary threshold corresponding to the load, and returning to step 20 in response to determining that the rotating speed is not smaller than the lower boundary threshold corresponding to the load.

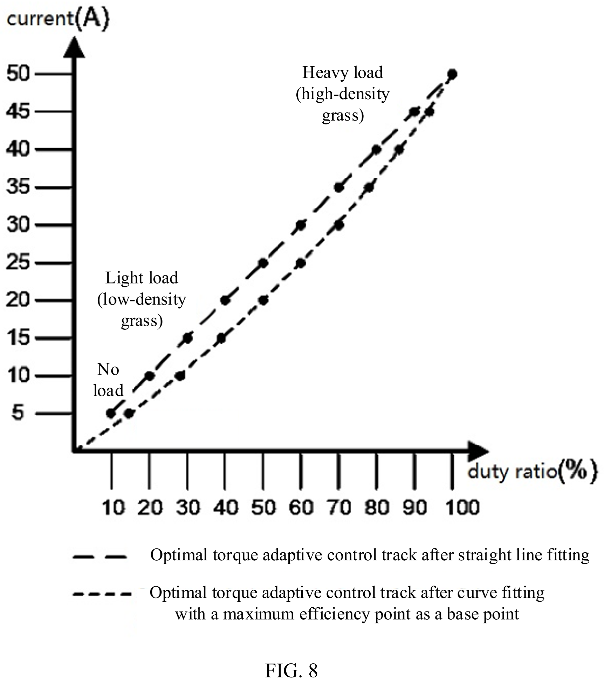

Preferably, to acquire an optimal track curve of an actual current varying with the duty ratio illustrated in FIG. 8, when the operating parameter includes or only includes the duty ratio, in the operation of acquiring the correspondence between the duty ratio and the load of the motor and acquiring the upper boundary threshold and the lower boundary threshold corresponding to the load, the data is measured is measured by using the open-loop pulse width modulation (PWM) control method, which includes: step 10: presetting a duty ratio $d_0\%$ of the motor, and acquiring a current characteristic curve corresponding to the motor; step 20: presetting a duty ratio $d_1\%$ and a duty ratio variable $\Delta d$ of the motor, and acquiring a current characteristic curve corresponding to the motor, where $d_1=d_0+\Delta d$; step 30: repeating step 20 until the duty ratio of the motor reaches 100%, and acquiring current characteristic curves corresponding to the motor under all preset duty ratios; step 40: mapping rotating current-torque characteristic curves under different duty ratio states to a current-duty ratio coordinate system; and step 50: selecting current points or torque points under the different duty ratio states (selection principle: maximum efficiency points, optimal torque points or current points and the like), matching a torque required by the motor with the current (for example, matching a maximum torque with a maximum current, and matching a minimum torque with a minimum current) to anchor two ends of an optimal control track and perform straight line fitting or curve fitting, and obtaining a required adaptive control track of the load. The above-described $\Delta d$ may be adjusted based on actual product requirements, measurement accuracy, main control chip resources and the like. A smaller value leads to a more refined curve fitting and a smoother transition of the control track, but results in a greater resource consumption.

Preferably, to acquire the optimal track curve of the actual current varying with the duty ratio illustrated in FIG. 8, when the operating parameter includes or only includes the duty ratio, in the operation of acquiring the relationship coordinates of the operating parameter varying with the load and acquiring the upper boundary threshold and the lower boundary threshold corresponding to the load subsequent to the operating parameter varying with the load, data is measured by using a current closed-loop control method, which includes: step 10: presetting a current $I_0\%$ of the motor, acquiring a current characteristic curve corresponding to the motor, and recording duty ratios under different torque scales; step 20: presetting a current $I_1\%$ and a current variable $\Delta I$ of the motor, and acquiring a current characteristic curve corresponding to the motor, where $I_1=I_0+\Delta I$; step 30: repeating step 20 until the duty ratio of the motor reaches a maximum duty ratio for the no-load state, and acquiring current characteristic curves corresponding to the motor under all preset currents; step 40: mapping current-torque characteristic curves under different current states to a current-duty ratio coordinate system; and step 50: selecting current points or torque points under the different duty ratio states (the selection principle: the maximum efficiency points, the minimum current points and the like), matching the torque required by the motor with the current (for example, matching the maximum torque with the maximum current, and matching the minimum torque with the minimum current) to anchor the two ends of the optimal control track and perform the straight line fitting or the curve fitting, and obtaining the required load adaptive control track.

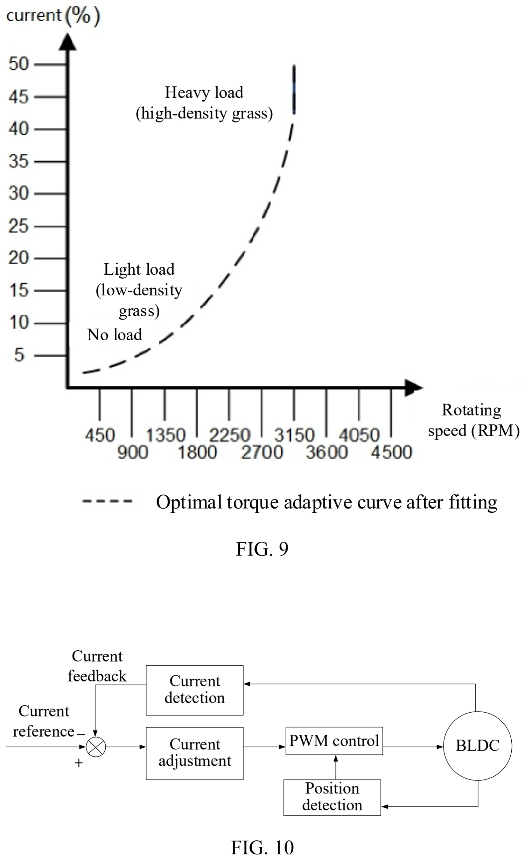

Preferably, to acquire an optimal track curve of the actual current varying with the rotating speed illustrated in FIG. 9, that is, when the operating parameter includes or only includes the rotating speed, in the operation of acquiring the correspondence between the rotating speed and the load of the motor and acquiring the upper boundary threshold and the lower boundary threshold corresponding to the load, the data is measured by using the rotating speed closed-loop control method, which includes: step 10: presetting a rotating speed $n_0\%$ of the motor, and acquiring a rotating speed-torque characteristic curve and a current-torque characteristic curve corresponding to the motor; step 20: presetting a rotating speed $n_1\%$ and a rotating speed variable $\Delta n$ of the motor, and acquiring a rotating speed-torque characteristic curve and a current-torque characteristic curve corresponding to the motor, where $n_1=n_0+\Delta n$; step 30: repeating step 20 until the rotating speed of the motor reaches the maximum rotating speed for the no-load state, and acquiring rotating speed-torque characteristic curves and current-torque characteristic curves corresponding to the motor under all preset rotating speeds; step 40: mapping rotating speed-torque characteristic curves and current-torque characteristic curves (coordinate transformation) under different rotating speed states to the rotating speed-current coordinate system; and step 50: selecting optimal rotating speed points or torque points, and current points or torque points (the selection principle: the maximum efficiency points, the maximum torque per ampere (MTPA) points and the like), matching the torque required by the motor with the rotating speed and the current( for example, matching the maximum torque with the maximum rotating speed and the minimum current, and matching the minimum torque with the minimum rotating speed and the minimum current) to anchor the two ends of the optimal control track and perform the straight line fitting or the curve fitting, and obtaining the required adaptive control track of the load. The above-described $\Delta n$ may be adjusted based on the actual product requirements, the measurement accuracy, the main control chip resources and the like. A smaller value leads to a more refined curve fitting and a smoother transition of the control track, but results in a greater resource consumption.

Referring to the principle of current closed-loop control illustrated in FIG. 10, this embodiment controls the operation of the brushless direct current motor (BLDC) through a current feedback closed-loop.

Regarding the method for acquiring the above-described optimal control track, for example, the optimal track curve can be fitted by the mathematical tool (such as Matlab). In the process of the software control, a present operating parameter of the motor is measured and acquired in real time, a shortest distance between a present measurement point and a curve is calculated, and a point on the curve (the target point, a straight line distance from this point to a measurement point is the shortest) is obtained. The present operating parameter, such as the rotating speed, the current, and the duty ratio are moved along this straight line (which is actually a linear function) to the target point, in such a manner that the optimal track curve control of the motor is realized.

## Embodiment 3

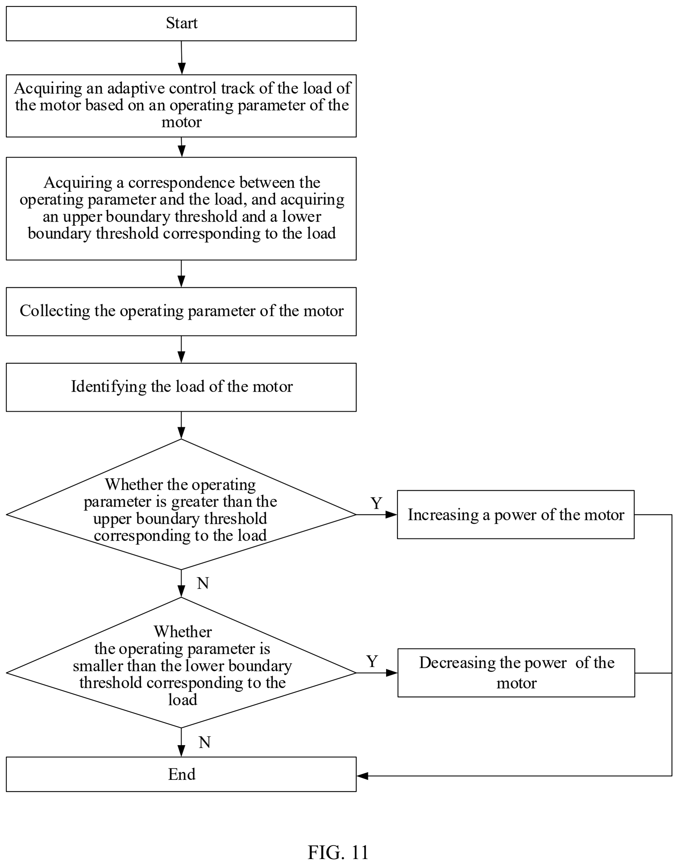

Addressing the deficiencies of the related art, Embodiment 3 provides an adaptive power closed-loop control method for a load of a motor. The control method is applied to the motor control apparatus to automatically adjust the output, in such a manner that the endurance capability is improved. As illustrated in FIG. 11, the method includes: acquiring an adaptive control track of the load of the motor based on the operating parameter of the motor; acquiring the correspondence between the operating parameter and the load of the motor, and acquiring the upper boundary threshold and the lower boundary threshold corresponding to the load; collecting the operating parameter of the motor; identifying the load of the motor based on the operating parameter of the motor; and based on the correspondence between the operating parameter and the load, that is, finally determining based on the relationship coordinates of the operating parameter varying with the load. Based on the above-described relationship coordinates between the load and the operating parameter, determination results includes: increasing the power of the motor in response to the operating parameter being greater than the upper boundary threshold corresponding to the load, and decreasing the power of the motor in response to the operating parameter being smaller than the lower boundary threshold corresponding to the load.

An operation of collecting the operating parameter of the motor is used to acquire the operating condition of the motor in real time, the operating condition including the duty ratio, the current, the power and the like of the motor. An operation of identifying the load of the motor is used to acquire the load condition of the motor in real time, the load condition including the high load, the low load, the load changes and the like. In an embodiment, in an operation of acquiring the correspondence between the operating parameter and the load of the motor, and acquiring the upper boundary threshold and the lower boundary threshold corresponding to the load, the acquiring the correspondence between the operating parameter and the load means acquiring the relationship coordinates of the operating parameter varying with the load, and the acquiring the upper boundary threshold and the lower boundary threshold corresponding to the load includes acquiring the upper boundary threshold and the lower boundary threshold corresponding to the load subsequent to the operating parameter varying with the load.

With regard to the operation of acquiring the correspondence between the load and the operating parameter, and acquiring the upper boundary threshold and the lower boundary threshold corresponding to the load, this operation is performed prior to the operation of the motor. The relationship coordinates and the boundary thresholds can be obtained through the testing and the calculation. With regard to the operations of collecting the operating parameter of the motor, identifying the load of the motor, and determining based on the relationship coordinates of the operating parameter varying with the load, the above-described operations are performed during the operation of the motor. The operating parameter, the load condition, and the determination process are performed in real time, to provide the real-time feedback and control the operation of the motor. In an embodiment, the operation of the motor refers to the motor driving the cutting blade to mow grass. Based on the inherent parameters and the operating conditions of the motor, during the operation, the determination is made based on the relationship coordinates between the operating parameter and the load. The motor is controlled in real time to increase or decrease the power, in such a manner that the automatic adjustment of the output of the mowing motor is achieved to improve the endurance capability of the mower.

According to the adaptive power closed-loop control method for the load of the motor in the present disclosure, the actual condition of the load is identified by collecting the relevant parameters when the mowing motor is in operation, in such a manner that the low power and the low rotating speed output under the low load, and the high power and the high rotating speed output under the high load are achieved, enabling the motor control and output adjustment to be more accurate. Thus, the effect of reducing the invalid energy consumption and improving the endurance capability of the entire mower is achieved. This control method requires no manual intervention, and correspondingly, the mower features the high degree of intelligence, the easy operation, and the excellent safety performance.

Preferably, regarding the method for acquiring the above-described optimal control track, where the acquiring the adaptive control track of the load of the motor based on the operating parameter of the motor further includes: step 10: selecting power points or torque points under different operating parameters, and establishing a table (two-dimensional array) through each calibrated power point or torque point; step 20: determining which grid of the table the motor falls into (within an area enclosed by four nearest calibrated points) based on a present power and a present rotating speed of the motor, and obtaining an upper boundary threshold and a lower boundary threshold corresponding to the rotating speed after the load of the motor changes (through a linear interpolation method or a direct function method); step 30: resetting a new target power (on the optimal load track) when the actual rotating speed of the motor exceeds a range formed by a preset upper boundary threshold and a preset lower boundary threshold; and step 40: transitioning an actual duty ratio onto the adaptive control track of the load by means of the straight line fitting or the curve fitting. From a macroscopic perspective, the rotating speed and the torque of the motor are continuously in the optimal track (with fluctuations at the microscopic level), where the small load leads to the low power, and the large load leads to the high power.

Preferably, the operating parameter includes the duty ratio or the rotating speed, or the operating parameter includes both the duty ratio and the rotating speed.

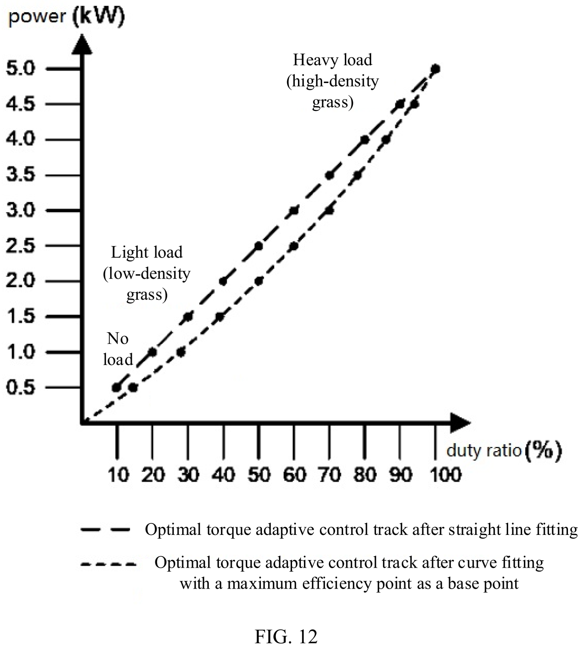

Preferably, to acquire an optimal track curve of an actual power varying with the duty ratio illustrated in FIG. 12, that is, when the operating parameter includes or only includes the duty ratio, in the operation of acquiring the relationship coordinates of the operating parameter varying with the load and acquiring the upper boundary threshold and the lower boundary threshold corresponding to the load subsequent to the operating parameter varying with the load, the data is measured by using the open-loop pulse width modulation (PWM) control method, which includes: step 10: presetting a duty ratio $d_0\%$ of the motor, and acquiring a power characteristic curve corresponding to the motor; step 20: presetting a duty ratio $d_1\%$ and a duty ratio variable $\Delta d$ of the motor, and acquiring a power characteristic curve corresponding to the motor, where $d_1 = d_0 + \Delta d$; step 30: repeating step 20 until the duty ratio of the motor reaches 100%, and acquiring power characteristic curves corresponding to the motor under all preset duty ratios; step 40: mapping power-torque characteristic curves under different duty ratio states to a power-duty ratio coordinate system; and step 50: selecting power points or torque points under the different duty ratio states (the selection principle: the maximum efficiency points, optimal torque points/power points and the like), matching the torque required by the motor with the power (for example, matching the maximum torque with the maximum power, and matching the minimum torque with the minimum power) to anchor the two ends of the optimal control track and perform the straight line fitting or the curve fitting, and obtaining the required adaptive control track of the load. The above-described $\Delta d$ may be adjusted based on the actual product requirements, the measurement accuracy, the main control chip resources and the like. A smaller value leads to a more refined curve fitting and a smoother transition of the control track, but results in a greater resource consumption.

Preferably, to acquire the optimal track curve of the actual power varying with the duty ratio illustrated in FIG. 12, that is, when the operating parameter includes or only includes the duty ratio, in the operation of acquiring the relationship coordinates of the operating parameter varying with the load and acquiring the upper boundary threshold and the lower boundary threshold corresponding to the load subsequent to the operating parameter varying with the load, the data is measured by using a power closed-loop control method, which includes: step 10: presetting a power $P_0\%$ of the motor, and acquiring a power characteristic curve corresponding to the motor, and recording duty ratios under different torque scales; step 20: presetting a power $P_1\%$ and a power variable $\Delta P$ of the motor, and acquiring a power characteristic curve corresponding to the motor, where $P_1=P_0+\Delta P$; step 30: repeating step 20 until the motor reaches a maximum duty ratio for a no-load power, and acquiring power characteristic curves corresponding to the motor under all preset powers; step 40: mapping power-torque characteristic curves under different rotating speed states to a power-duty ratio coordinate system; and step 50: selecting the rotating speed points or the torque points under the different duty ratio states (the selection principle: the maximum efficiency points, the minimum current points and the like), matching the torque required by the motor with the power (for example, matching the maximum torque with the maximum power, and matching the minimum torque with the minimum power) to anchor the two ends of the optimal control track and perform the straight line fitting or the curve fitting, and obtaining the required adaptive control track of the load. The above-described $\Delta P$ may be adjusted based on the actual product requirements, the measurement accuracy, the main control chip resources and the like. A smaller value leads to a more refined curve fitting and a smoother transition of the control track, but results in a greater resource consumption.

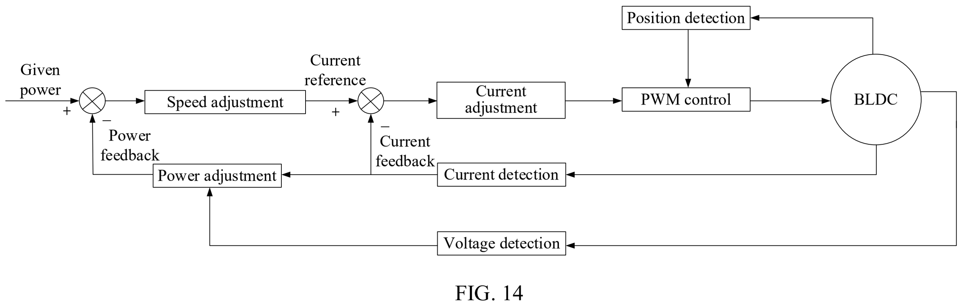

Referring to the principle of rotating speed closed-loop control illustrated in FIG. 14, this embodiment controls the operation of the brushless direct current motor (BLDC) through the speed feedback closed-loop.

Preferably, when the operating parameter includes or only includes the duty ratio, during the actual operation of the mowing motor, the above-described control method is implemented by: initially detecting a power-related parameter( such as the current, the voltage, and the freewheeling time), and acquiring the present duty ratio; subsequently preprocessing the power-related parameter; determining whether the motor is currently in a power adjustment process, adjusting the power by Proportional, Integral, Derivative Control (PID) and returning to the initial stage in response to determining that the motor is currently in the power adjustment process, and determining an upper boundary and a lower boundary (corresponding to the load increase and the load decrease) corresponding to the duty ratio based on the present power (by linear interpolation calculation or direct function calculation after looking up a table) and proceeding to the next operation in response to determining that the motor is not currently in the power adjustment process; determining whether the duty ratio is greater than the upper boundary corresponding to the load increase (the load becomes greater), setting a new target power, that is, increasing the power, and returning to the initial stage in response to determining that the duty ratio is greater than the upper boundary corresponding to the load increase, and proceeding to the next operation in response to determining that the duty ratio is not greater than the upper boundary corresponding to the load increase; and determining whether the duty ratio is smaller than the lower boundary corresponding to the load decrease (the load becomes smaller), setting a new target power, that is, decreasing the power, and returning to the initial stage in response to the determining that the duty ratio is smaller than the lower boundary corresponding to the load decrease.

Regarding the method for acquiring the above-described optimal control track, the optimal track curve can be fitted by the mathematical tool (such as Matlab).

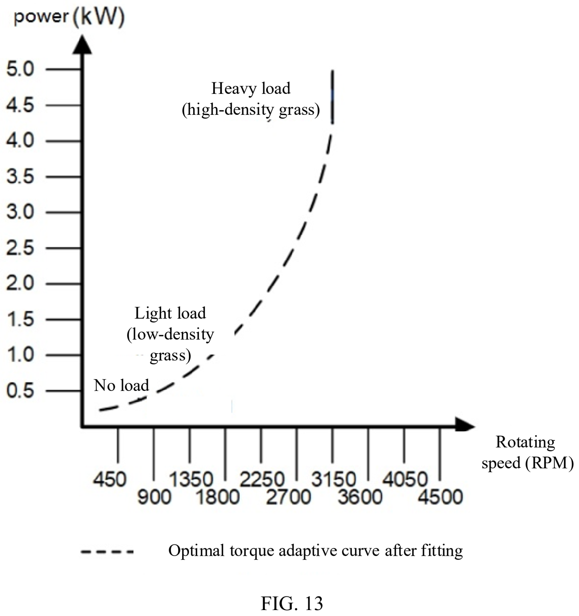

Preferably, to acquire an optimal track curve of the actual power varying with the rotating speed illustrated in FIG. 13, that is, when the operating parameter includes or only includes the rotating speed, in the operation of acquiring the relationship coordinates of the operating parameter varying with the load and acquiring the upper boundary threshold and the lower boundary threshold corresponding to the load subsequent to the operating parameter varying with the load, the data is measured by using the rotating speed closed-loop control method, which includes: step 10: presetting a rotating speed $n_0\%$ of the motor, and acquiring a rotating speed-torque characteristic curve and a power-torque characteristic curve corresponding to the motor; step 20: presetting a rotating speed $n_1\%$ and a rotating speed variable $\Delta n$ of the motor, and acquiring a rotating speed-torque characteristic curve and a power-torque characteristic curve corresponding to the motor, where $n_1=n_0+\Delta n$; step 30: repeating step 20 until the rotating speed of the motor reaches the maximum rotating speed for the no-load state, and acquiring rotating speed-torque characteristic curves and power-torque characteristic curves corresponding to the motor under all preset rotating speeds; step 40: mapping rotating speed-torque characteristic curves and power-torque characteristic curves under different rotating speed states to a rotating speed-power coordinate system; and step 50: selecting optimal rotating speed points or torque points, and optimal power points or torque points (the selection principle: the maximum efficiency points, maximum torque per power (MTPP) points and the like), matching the maximum torque required by the motor with the maximum rotating speed and the maximum power, and matching the minimum torque with the minimum rotating speed and the minimum power, to anchor the two ends of the optimal control track and perform the straight line fitting or the curve fitting, and obtaining the required adaptive control track of the load. The above-described ∆n may be adjusted based on the actual product requirements, the measurement accuracy, the main control chip resources and the like. A smaller value leads to a more refined curve fitting and a smoother transition of the control track, but results in a greater resource consumption.

Preferably, when the operating parameter includes or only includes the rotating speed, during the actual operation of the mowing motor, the above-described control method is implemented by: initially detecting the rotating speed and the power of the motor; subsequently preprocessing the rotating speed and the power; determining whether the motor is currently in the power adjustment process, adjusting the actual power by Proportional, Integral, Derivative Control (PID) and returning to the initial stage in response to determining that the motor is currently in the power adjustment process, and determining an upper boundary and a lower boundary (corresponding to the load increase and the load decrease) corresponding to an operating condition rotating speed based on the present power (by linear interpolation calculation or direct function calculation after looking up a table) and proceeding to the next operation in response to determining that the motor is not currently in the power adjustment process; determining whether the rotating speed is smaller than the lower boundary corresponding to the load increase (the load becomes greater), setting a new target power, that is, increasing the power, and returning to the initial stage in response to determining that the rotating speed is smaller than the lower boundary corresponding to the load increase, and proceeding to the next operation in response to determining that the rotating speed is not smaller than the lower boundary corresponding to the load increase; and determining whether the rotating speed is greater than the upper boundary corresponding to the load decrease (the load becomes smaller), setting a new target power, that is, decreasing the power, and returning to the initial stage in response to the determining that the rotating speed is greater than the upper boundary corresponding to the load decrease.

Preferably, when the operating parameter includes both the duty ratio and the rotating speed, the two dimensions are integrated and correlated based on the above-described method associated with the operating parameter including the duty ratio or the rotating speed, in such a manner that adjustment of the target power is based on the upper boundary threshold and lower boundary threshold corresponding to the duty ratio and/or the rotating speed. During the actual operation of the mowing motor, the control method is implemented by: detecting variables such as the rotating speed, the current, the voltage, the voltage difference, and the freewheeling time of the motor, and acquiring the present power and the duty ratio; subsequently preprocessing the above-described variables; determining whether the motor is currently in the power adjustment process, adjusting the actual power by Proportional, Integral, Derivative Control (PID) and returning to the initial stage in response to determining that the motor is currently in the power adjustment process, and determining upper boundaries and lower boundaries (corresponding to the load increase and the load decrease) corresponding to the duty ratio, the current, and the rotating speed based on the present power (by linear interpolation calculation or direct function calculation after looking up a table) and proceeding to the next operation in response to determining that the motor is not currently in the power adjustment process; determining whether the duty ratio is greater than the upper boundary corresponding to the load increase and/or whether the current is greater than the upper boundary corresponding to the load increase and/or whether the rotating speed is smaller than the lower boundary corresponding to the load increase (the load becomes greater), setting a new target power, that is, increasing the power, and returning to the initial stage in response to determining that the duty ratio is greater than the upper boundary corresponding to the load increase and/or the current is greater than the upper boundary corresponding to the load increase and/or the rotating speed is smaller than the lower boundary corresponding to the load increase, and proceeding to the next operation in response to determining that the duty ratio is not greater than the upper boundary corresponding to the load increase and the current is not greater than the upper boundary corresponding to the load increase and the rotating speed is not smaller than the lower boundary corresponding to the load increase; determining whether the duty ratio is smaller than the lower boundary corresponding to the load decrease and/or whether the current is smaller than the lower boundary corresponding to the load decrease and/or whether the rotating speed is greater than the upper boundary corresponding to the load decrease (the load becomes smaller), setting a new target power, that is, decreasing the power, and returning to the initial stage in response to determining that the duty ratio is smaller than the lower boundary corresponding to the load decrease and/or the current is smaller than the lower boundary corresponding to the load decrease and/or the rotating speed is greater than the upper boundary corresponding to the load decrease.

**Embodiment 4**

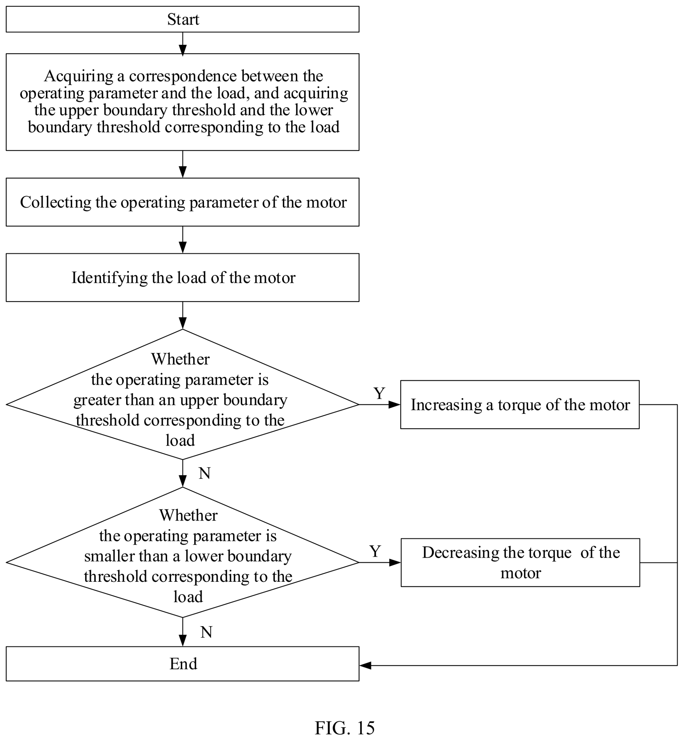

Addressing the deficiencies of the related art, an objective of the present disclosure is to provide an adaptive torque closed-loop control method for a load of a motor. The control method is applied to the motor control apparatus to automatically adjust the output, in such a manner that the endurance capability is improved. As illustrated in FIG. 15, the method includes: collecting the operating parameter of the motor; identifying the load of the motor based on the operating parameter of the motor; based on the correspondence between the load and the operating parameter, that is, finally determining based on the relationship coordinates of the operating parameter varying with the load. Based on the relationship coordinates between the load and the operating parameter, determination results includes: increasing the torque of the motor in response to the operating parameter being greater than the upper boundary threshold corresponding to the load, and decreasing the torque of the motor in response to the operating parameter being smaller than the lower boundary threshold corresponding to the load.

An operation of collecting the operating parameter of the motor is used to acquire the operating condition of the motor in real time, the operating condition including the duty ratio, the current, the power and the like of the motor. An operation of identifying the load of the motor is used to acquire the load condition of the motor in real time, the load condition including the high load, the low load, the load changes and the like. The control method of this embodiment further includes, prior to the operation of collecting the operating parameter of the motor: acquiring the correspondence between the load and the operating parameter, that is, acquiring the relationship coordinates of the operating parameter varying with the load; and acquiring the upper boundary threshold and the lower boundary threshold corresponding to the load, including acquiring the upper boundary threshold and the lower boundary threshold corresponding to the load subsequent to the operating parameter varying with the load.

With regard to the operation of acquiring the correspondence between the load and the operating parameter, and acquiring the upper boundary threshold and the lower boundary threshold corresponding to the load, this operation is performed prior to the operation of the motor. The relationship coordinates and the boundary thresholds can be obtained through the testing and the calculation. With regard to the operations of collecting the operating parameter of the motor, identifying the load of the motor, and determining based on the relationship coordinates of the operating parameter varying with the load, the above-described operations are performed during the operation of the motor. The operating parameter, the load condition, and the determination process are performed in real time, to provide the real-time feedback and control the operation of the motor. In an embodiment, the operation of the motor refers to the motor driving the cutting blade to mow grass. Based on the inherent parameters and the operating conditions of the motor, during the operation, the determination is made based on the relationship coordinates between the operating parameter and the load. The motor is controlled in real time to increase or decrease the torque, in such a manner that the automatic adjustment of the output of the mowing motor is achieved to improve the endurance capability of the mower.

According to the adaptive torque closed-loop control method for the load of the motor in the present disclosure, the actual condition of the load is identified by collecting the relevant parameters when the mowing motor is in operation, in such a manner that the low power and the low rotating speed output under the low load, and the high power and the high rotating speed output under the high load are achieved, enabling the motor control and output adjustment to be more accurate. Thus, the effect of reducing the invalid energy consumption and improving the endurance capability of the entire mower is achieved. This control method requires no manual intervention, and correspondingly, the mower features the high degree of intelligence, the easy operation, and the excellent safety performance.

Preferably, the operating parameter includes the duty ratio or the rotating speed, or the operating parameter includes both the duty ratio and the rotating speed.

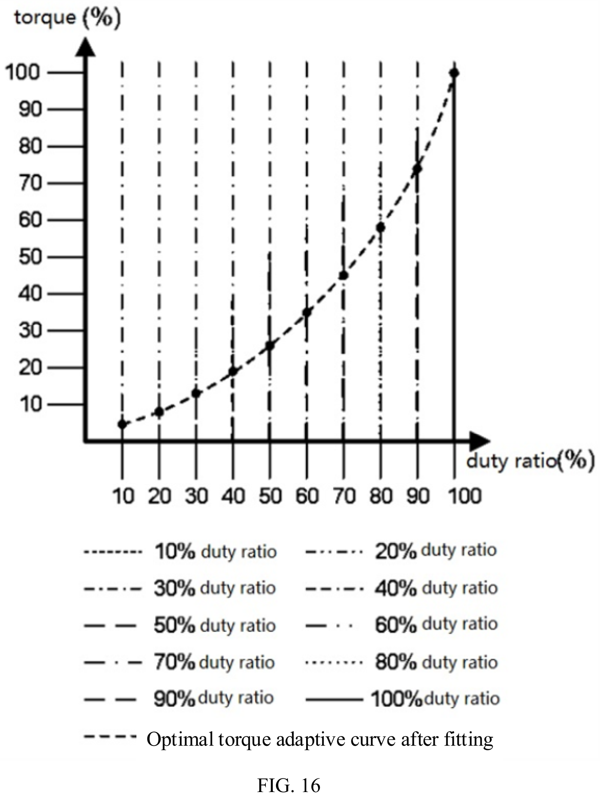

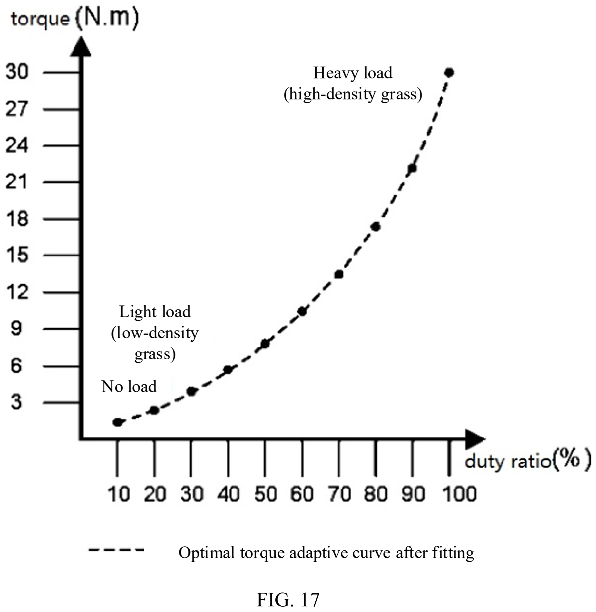

Preferably, to acquire an optimal track curve of an actual torque varying with the duty ratio illustrated in FIG. 17, that is, when the operating parameter includes or only includes the duty ratio, in the operation of acquiring the relationship coordinates of the operating parameter varying with the load and acquiring the upper boundary threshold and the lower boundary threshold corresponding to the load subsequent to the operating parameter varying with the load, the data is measured by using the open-loop pulse width modulation (PWM) control method, referring to FIG. 16, which includes: step 10: presetting a duty ratio $d_0$% of the motor, and acquiring a torque characteristic curve corresponding to the motor; step 20: presetting a duty ratio $d_1$% and a duty ratio variable $\Delta d$ of the motor, and acquiring a torque characteristic curve corresponding to the motor, where $d_1=d_0+\Delta d$; step 30: repeating step 20 until the duty ratio of the motor reaches 100%, and acquiring torque characteristic curves corresponding to the motor under all preset duty ratios; step 40: mapping torque-rotating speed characteristic curves under different duty ratio states to a torque-duty ratio coordinate system; and step 50: selecting rotating speed points or torque points under the different duty ratio states (the selection principle: the maximum efficiency points), matching the torque required by the motor with the duty ratio (for example, matching the maximum torque with the maximum duty ratio, and matching the minimum torque with the minimum duty ratio) to anchor the two ends of the optimal control track and perform the straight line fitting or the curve fitting, and obtaining the required adaptive control track of the load. The above-described $\Delta d$ may be adjusted based on the actual product requirements, the measurement accuracy, the main control chip resources and the like. A smaller value leads to a more refined curve fitting and a smoother transition of the control track, but results in a greater resource consumption.

Preferably, in the adaptive torque closed-loop control method for the load of the motor of this embodiment, when the operating parameter includes the duty ratio, the control method includes: step 10: acquiring the correspondence between the load and the operating parameter, and acquiring the upper boundary threshold and the lower boundary threshold corresponding to the load; step 20: collecting the operating parameter of the motor, where the collecting the operating parameter of the motor includes detecting the present rotating speed; step 30: preprocessing the rotating speed, and identifying the load of the motor based on the operating parameter of the motor; step 40: obtaining an optimal target duty ratio subsequent to performing indexing and parsing based on the rotating speed and a target torque; step 50: determining whether the motor is currently in a duty ratio adjustment process, adjusting the present duty ratio (duty ratio ramp function) and returning to step 20 in response to determining that the motor is currently in the duty ratio adjustment process, determining an operating condition rotating speed and an upper boundary threshold and a lower boundary threshold (corresponding to the load increase and the load decrease) corresponding to the duty ratio based on the present torque (by linear interpolation calculation or direct function calculation after looking up a table) and proceeding to step 60 in response to determining that the motor is not currently in the duty ratio adjustment process; step 60: determining whether the duty ratio is greater than the upper boundary threshold corresponding to the load or whether the rotating speed is smaller than the lower boundary threshold corresponding to the load (that is, the load becomes greater) based on the correspondence between the operating parameter and the load, increasing the torque of the motor (setting a new target torque) and returning to step 20 in response to determining that the duty ratio is greater than the upper boundary threshold corresponding to the load or the rotating speed is smaller than the lower boundary threshold corresponding to the load, and proceeding to step 70 in response to determining that the duty ratio is not greater than the upper boundary threshold corresponding to the load and the rotating speed is not smaller than the lower boundary threshold corresponding to the load; and step 70: determining whether the duty ratio is smaller than the lower boundary threshold corresponding to the load or whether the rotating speed is greater than the lower boundary threshold corresponding to the load (that is, the load becomes smaller), decreasing the torque of the motor (setting a new target torque) and returning to step 20 in response to determining that the duty ratio is smaller than the lower boundary threshold corresponding to the load or the rotating speed is greater than the lower boundary threshold corresponding to the load, and returning to step 20 in response to determining that the duty ratio is not smaller than the lower boundary threshold corresponding to the load and the rotating speed is not greater than the lower boundary threshold corresponding to the load.

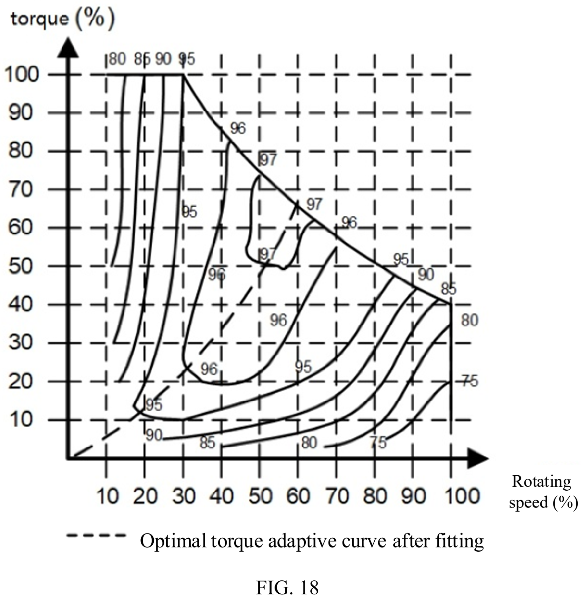

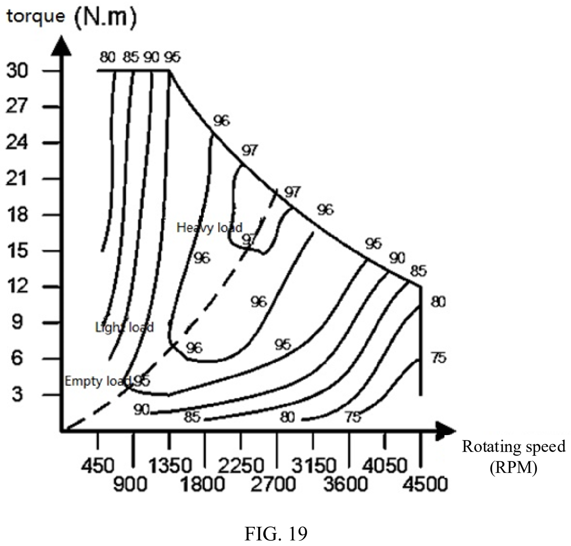

Preferably, to acquire an optimal track curve of the actual torque varying with the rotating speed illustrated in FIG. 19, that is, when the operating parameter includes or only includes the rotating speed, in the operation of acquiring the relationship coordinates of the operating parameter varying with the load and acquiring the upper boundary threshold and the lower boundary threshold corresponding to the load subsequent to the operating parameter varying with the load, the data is measured by using the rotating speed closed-loop control method, as illustrated in FIG. 18, which includes: step 10: presetting a rotating speed $n_0\%$ of the motor, and acquiring a torque-rotating speed efficiency MAP corresponding to the motor; step 20: presetting a rotating speed $n_1\%$ and a rotating speed variable $\Delta n$ of the motor, and acquiring a torque-rotating speed efficiency MAP corresponding to the motor, where $n_1=n_0+\Delta n$; step 30: repeating step 20 until the rotating speed of the motor reaches the maximum rotating speed for the no-load state, and acquiring torque-rotating speed efficiency MAPs corresponding to the motor under all preset rotating speeds; step 40: plotting contour diagrams of efficiency based on torque-rotating speed efficiency MAPs under different rotating speed states to obtain a torque-rotating speed efficiency MAP; and step 50: selecting rotating speed points or torque points, and power points or torque points (the selection principle: the maximum efficiency points, the maximum torque per ampere (MTPA) points and the like), matching the maximum torque required by the motor with the maximum rotating speed and a maximum efficiency, and matching the minimum torque with the minimum rotating speed and the maximum efficiency, to anchor the two ends of the optimal control track and perform the straight line fitting or the curve fitting, and obtaining the required adaptive control track of the load. The above-described $\Delta n$ may be adjusted based on the actual product requirements, the measurement accuracy, the main control chip resources and the like. A smaller value leads to a more refined curve fitting and a smoother transition of the control track, but results in a greater resource consumption.

Preferably, in the adaptive torque closed-loop control method for the load of the motor of this embodiment, when the operating parameter includes the rotating speed, the control method includes: step 10: acquiring the correspondence between the load and the operating parameter, and acquiring the upper boundary threshold and the lower boundary threshold corresponding to the load; step 20: collecting the operating parameter of the motor, where the collecting the operating parameter of the motor includes detecting the present rotating speed and the current; step 30: preprocessing the rotating speed and the current, and identifying the load of the motor based on the operating parameter of the motor; step 40: obtaining an optimal target current subsequent to performing the indexing and the parsing based on the rotating speed and the target torque; step 50: determining whether the motor is currently in a current adjustment process, adjusting a present current (by Proportional, Integral, Derivative Control (PID)) and returning to step 20 in response to determining that the motor is currently in the current adjustment process, and determining an operating condition rotating speed and an upper boundary threshold and a lower boundary threshold (corresponding to the load increase and the load decrease) corresponding to the current based on the present torque (by linear interpolation calculation or direct function calculation after looking up a table) and proceeding to step 60 in response to determining that the motor is not currently in the current adjustment process; step 60: determining whether the current is greater than the upper boundary threshold corresponding to the load or whether the rotating speed is smaller than the lower boundary threshold corresponding to the load (that is, the load becomes greater) based on the correspondence between the operating parameter and the load, increasing the torque of the motor (setting a new target torque) and returning to step 20 in response to determining that the current is greater than the upper boundary threshold corresponding to the load or the rotating speed is smaller than the lower boundary threshold corresponding to the load, and proceeding to step 70 in response to determining that the current is not greater than the upper boundary threshold corresponding to the load and the rotating speed is not smaller than the lower boundary threshold corresponding to the load; and step 70: determining whether the current is smaller than the lower boundary threshold corresponding to the load or whether the rotating speed is greater than the lower boundary threshold corresponding to the load (that is, the load becomes smaller), decreasing the torque of the motor (setting a new target torque) and returning to step 20 in response to determining that the current is smaller than the lower boundary threshold corresponding to the load or the rotating speed is greater than the lower boundary threshold corresponding to the load, and returning to step 20 in response to determining that the current is not smaller than the lower boundary threshold corresponding to the load and the rotating speed is not greater than the lower boundary threshold corresponding to the load.

**Embodiment 5**

A control method for a working motor is provided in an embodiment of the present disclosure. In the related art, present riding mowers perform mowing control based on preset gears during a mowing operation, failing to automatically adjust a mowing control manner based on actual operating conditions. Manual intervention is still required to adjust mowing of the riding mower. This mowing manner causes the riding mower to unable to complete tasks efficiently, and may even cause clogging of the riding mower.

The riding mower is taken as an example and described below. The riding mower is provided with a motor at each of a left side and a right side at a bottom of a vehicle frame. The motor is configured to drive a mowing tool. The mowed grass is discharged from left to right to a right side of the mower through a groove connected between the blades. The two motors of the mower are individually controlled by a single chip microcomputer (MCU), with a constant rotating speed. The riding mower is equipped with a high gear and a low gear. The high gear corresponds to a motor with a higher rotating speed, while the low gear corresponds to a motor with a lower rotating speed. Under a fixed gear, the rotating speed of the motor decreases when the load increases, and the rotating speed of the motor increases when the load decreases, which is inconsistent with the actual operating requirements. What the user expects is that the rotating speed increases when the load increases to maintain mowing efficiency, and the rotating speed decreases when the load decreases to avoid the waste of invalid energy consumption. In this case, the user needs to determine the operating condition and manually intervene to adjust the gear. For example, in an operating process of an electric tool, changes in grass density result in changes in the load of the motor. Therefore, the electric tool is equipped with several gears during operation, and a corresponding rotating speed or a torque of the motor is set for each gear. Based on inherent characteristics of the motor, the rotating speed of the motor may change with changes in the load. When a mowing density increases, the load of the motor increases accordingly. However, a speed of the mower remains at a preset speed at this time, failing to meet the operating requirements. That is, when the grass density increases, the motor needs to be adjusted to have a high rotating speed to complete a task. Correspondingly, when the grass density decreases, the load of the motor decreases accordingly, and the rotating speed of the motor needs to be reduced; otherwise, resources may be wasted, and the grass may be excessively mowed. In the above-described control manner, the load and the rotating speed cannot achieve adaptive matching, failing to meet the operating requirements and causing waste of the resources.

In addition, when the electric tool is in a high gear mode, an amount of grass mowed by the mowing blade increases as the motor runs at the high rotating speed, and a corresponding grass discharge pressure is also large. Grass clogging occurs at a grass discharge outlet of the electric tool, resulting in a shutdown of a lawn mower. The mowing motor cannot automatically the speed, thus failing to alleviate the grass clogging, i.e., manual handling is required to solve the grass clogging. To describe abnormalities of a device caused by the grass clogging more clearly, further explanations are provided by way of examples of actual grass clogging scenarios. Assuming that the user is performing the mowing operation, common grass clogging scenarios are as follows.

Example 1: Assuming that the grass on the lawn is uniformly distributed, the left mowing motor and the right mowing motor operate at the same rotating speed. However, as the mowed grass clippings are discharged uniformly from left to right, a blade of the right mowing motor undertakes a grass discharge task subsequent to the grass being mowed by a left blade. Consequently, a power of the right mowing motor is greater than a power of the left mowing motor. When a density of grass clumps on the lawn is high, a volume of grass clippings increases, and a grass discharge pressure on the right mowing motor is large, resulting in grass discharge clogging and the shutdown of the mowing motor.

Example 2: When the grass on the lawn is not uniformly distributed, the mowing motor at a side with a high grass density has a load greater than a load of the mowing motor at a side with a low grass density. Assuming that a load of the left side is greater than a load of the right side, the power of the left mowing motor increases. Also, the volume of the grass clippings increases, and the grass discharge pressure on the right mowing motor is large, resulting in the grass discharge clogging and the shutdown of the mowing motor.

Example 3: In a travelling process of the electric tool, the load of the motor on one side may be greater than the load of the motor on the other side due to a travelling direction. For example, when the electric tool is turning to the right, the load of the right side may be greater than the load of the left side. Consequently, the power of the right mowing motor increases, the volume of the grass clippings increases, and the grass discharge pressure on the mowing motor is large, resulting in the grass discharge clogging and the shutdown of the mowing motor.

In view of a problem that the above-described riding mower fails to adjust the control manner of the mowing motor in real time during use, resulting in a mismatch between the rotating speed and the load of the motor, and thus resulting in low mowing efficiency, a control method for a riding mower is provided in an embodiment of the present disclosure. An operating parameter and a present load parameter of the mowing motor are detected, a preset operating parameter is retrieved based on the present load parameter in response to determining that the present load parameter does not match a preset load parameter. Based on the preset operating parameter, a present operating parameter is adjusted to achieve matching between the present load parameter and the preset load parameter in the motor. In this way, technical problems in the related art such as motor blocking, shutdown, failure, or resource waste are solved, improving the mowing efficiency of the riding mower.

Solutions in the embodiments of the present disclosure may be implemented using various computer programming languages, such as an object-oriented programming language Java and an interpreted scripting language JavaScript.

An application environment of the control method for the riding mower provided in the embodiments of the present disclosure is briefly described below. A control method provided in the embodiments of the present disclosure is applied to the mowing motor of the riding mower. A control system of the mowing motor includes a detection module and a processor. The detection module is connected to the processor.

The processor is configured to: acquire a preset operating parameter matching the present load parameter in response to determining that an acquired present load parameter does not match the preset load parameter; and adjust the present operating parameter based on the preset operating parameter subsequent to acquiring preset operating parameter. In this way, the matching between the present load parameter and the preset load parameter in the mowing motor can be achieved. The processor may be a hardware module or a processing module integrated in a server.

The detection module is configured to detect the operating parameter and the load condition of the mowing motor in the operating process.

The control system mentioned in the embodiments of the present disclosure may be deployed based on actual operating requirements and operating environments. For example, a drive module may control motors in multiple control directions, where the motors are configured to control an operation of an operating tool. Herein, the system is described by way of example where the operating tool is a mowing tool and the motor include a left motor and a right motor, and the system provided in the present disclosure is not limited thereto.

During deployment of the system in the embodiments of the present disclosure, the drive module may further include a left mowing controller and a right mowing controller. The left mowing controller is connected to the left mowing motor, and the right mowing controller is connected to the right mowing motor. The left mowing motor may be disposed at a left side of a vehicle and is configured to control an operating manner of a left-side tool. The right mowing motor may be disposed at a right side of the vehicle and is configured to control an operating manner of a right-side tool.

In an optional embodiment, the above-described system may be deployed at a device side or a server side. When the above-described system is deployed at the server side, only a transmission module and a detection module need to be deployed at the device side, further reducing a cost of the device. Further, when the above-described system is deployed at the server side, a plurality of devices may be coordinately controlled, improving efficiency of the operation and efficiency of centralized management. For example, a density and a travelling path of a to-be-mowed lawn are first detected; and a main control console assigns tasks to each mower in real time, and sets a corresponding matching rotating speed for each mower based on the assigned task of each mower.

Taking the processor in the control system as an executor, a specific description is provided by applying the method provided in the embodiments of the present disclosure to the scenario where the device cannot adaptively control a plurality of mowing motors. A control method for a device provided in an embodiment of the present disclosure includes the following step 301 to step 303.

Step 301: in response to the motor operating with a target operating parameter, collecting the present load parameter of the motor and a preset load parameter matching the target operating parameter.

The motor is configured to control a working mechanism of an outdoor working vehicle, for example, the motor is configured to control a motor for mowing.

The outdoor working vehicle may include a plurality of motors, and each motor may have different preset operating parameters. Each motor may control the outdoor working vehicle to complete the operation in different directions, and each motor may be provided with different operating tools. For example, the device may include a left motor and a right motor. The left motor is responsible for controlling the tool to complete tasks on a left side of the device, and the right motor is responsible for controlling the tool to complete tasks on a right side of the device.

The operating parameter includes at least one of the rotating speed of the motor, the torque of the motor, or a control signal of the motor.

The load parameter is configured to indicate a load borne by the motor during the operation, and may be calculated based on an operating parameter of the device and the current of the motor. During the actual operation of the motor in the device, the motor may change due to various factors such as an environmental factor, a task factor, and a device factor. For example, in a mowing process, when the grass density increases, the load of the motor may increase accordingly, and correspondingly, the rotating speed of the motor also needs to be increased accordingly to meet task requirements.

In the embodiments of the present disclosure, the device may be controlled to perform tasks with the target operating parameter. By setting the preset load parameter matching the target operating parameter, whether the present load parameter matches the target operating parameter can be quantitatively and accurately determined, enabling timely determination and adjustment of the operating parameter, and improving operating efficiency of the device.

The method provided in the embodiments of the present disclosure may detect the present operating parameter and the load parameter in real time, may detect the present operating parameter and the load parameter after a calibration function is activated, or may automatically activate an adaptive mode to detect the present operating parameter and the load parameter after detecting other parameters of the vehicle, for example, in a case where a change in a traveling direction of the vehicle or a change in a mowing environment is detected.

In an embodiment of the present disclosure, when the present operating parameter or the load parameter is acquired, pre-determination may be performed. In response to determining that the present operating parameter is greater than a preset threshold or the load parameter is greater than the preset threshold, adjustment is performed. For example, a prompt message may be generated, and the user may determine the next operation based on the prompt message, such as performing shutdown processing, adjustment processing, or on-site survey to analyze reasons leading to a data change.

Step 302: in response to the present load parameter not matching the preset load parameter, retrieving a preset operating parameter matching the present load parameter.

The preset load parameter is set based on the present operating parameter of the motor, that is, the preset load parameter matches the present operating parameter. For example, when the present load parameter of the motor is smaller than a preset load parameter matching the present rotating speed, it is indicated that an operating speed of the motor is excessively low and requires acceleration processing. For reference, during mowing, after the grass density increases, although the operating speed of the motor remains constant, the current of the motor is detected to be increased due to an increased resistance of the blade, that is, a present load of the motor is greater than a preset load. Thus, the motor requires a higher rotating speed to complete the task.

A mapping relationship may be established by setting the load parameter and the preset operating parameter based on data such as historical operating data and historical load data, or may be generated after training via a big data model.

The mapping relationship may be retrieved from a local storage space to facilitate quick response to a request, or may be retrieved from a cloud end, further saving local device resources.

Through a mapping relationship between the load parameter and the preset operating parameter, the present load parameter and the preset operating parameter can be quickly and accurately matched.

Step 303: Adjusting the present operating parameter based on the preset operating parameter to achieve closed-loop control of the operating parameter.

Adjustment of the present operating parameter based on the preset operating parameter may be completed either by means of replacement processing or by means of difference compensation.

Taking the operating parameter of the motor including the rotating speed as an example, when adjusting the present operating parameter of the motor, the adjustment may be performed by calculating a compensation rotating speed. For example, a preset rotating speed of the tool in the device is superimposed with the compensation rotating speed of a corresponding actual rotating speed, and each actual expected rotating speed is obtained to achieve closed-loop control of a steering angle. Through data compensation, drastic changes in the operating parameter of the device can be avoided, reducing an operation risk of the device.

Correspondingly, when a difference between the preset operating parameter and the present operating parameter is small, the present operating parameter may also be directly replaced with the preset parameter to complete parameter adjustment.

Subsequent to adjusting the operating parameter, the device is driven to operate based on the adjusted operating parameter, and the load parameter of the device is continuously monitored. When the load parameter changes, it is further determined whether the operating parameter needs to be adjusted, in such a manner that the closed-loop control of the operating parameter is achieved and the efficiency of controlling the device is improved.

For example, a controller of the device is configured to: receive and parse the load of the left mowing motor and/or the right mowing motor; match a corresponding target rotating speed of the left mowing wheel and/or the right mowing wheel; and transmit a target rotating speed of a left drive wheel and/or a right drive wheel to a left drive controller and/or a right drive controller. Subsequent to receiving a target signal, the left drive controller and/or the right drive controller performs rotating speed closed-loop control on the left drive motor and/or the right drive motor.

The control method in the above embodiments may be applied to the plurality of motors. The plurality of motors may be deployed on a same device or different devices, and each motor may have different control strategy, that is, each motor has different operating parameter to perform coordinated control to complete an operation task.

In an optional embodiment, when the method provided in the present disclosure performs the coordinated control of the plurality of motors, the control strategy may be determined by synthesizing factors such as the environmental factor, the task factor, and the device factor. For example, there are three devices, which are A, B, and C. The motor in each device may be driven to perform the task in accordance with a preset operating strategy. When the device A travels at a left side of the device B, the device A and the device B perform the task in parallel. Since the device A discharges grass clippings from left to right, a rotating speed of a left motor of the device B needs be increased to avoid grass clipping accumulation. When the device A travels in front of the device C, the device A and the device C perform the task in parallel. In this case, a rotating speed of a motor of the device C may be reduced. In this way, preliminary processing is carried out by a leading device, and precise processing is carried out by a following vehicle, thus completing the task.

Taking the mowing motor including the left motor and the right motor, and the operating parameter including the rotating speed of the motor as an example, the control method provided in the present disclosure is described as follows. The method includes: first, determining whether a matching function is activated; in response to the matching function being successfully activated, sequentially determining whether a rotating speed of the left motor and a rotating speed of the right motor match the preset rotating speed, where this operation may be used to determine whether a motor device is activated and operated based on a preset control manner; in response to the rotating speed of the left motor and the rotating speed of the right motor matching the preset rotating speed, determining whether the load of the motor matches the rotating speed of the motor, that is, determining whether the rotating speed of the left mowing motor and the rotating speed of the right mowing motor are consistent with a rotating speed matching an actual load; in response to the load of the motor not matching the rotating speed of the motor, performing matching processing, for example, retrieving a target rotating speed matching the load of the motor, and adjusting the rotating speed of the motor; designating a matched rotating speed of the left mowing motor and the right mowing motor as the target rotating speed; subsequent to adjustment, the left mowing motor and the right mowing motor performing rotating speed matching adaptive control in real time at a given target rotating speed.

In the control method for the device provided in the embodiments of the present disclosure, the operating parameter and the present load parameter of the motor are detected. In response to the present load parameter not matching the preset load parameter, the preset operating parameter is retrieved through the present load parameter. Based on the preset operating parameter, the present operating parameter is adjusted to achieve matching between the present load parameter and the preset load parameter in the motor. In this way, technical problems in the related art such as motor blocking, shutdown, failure, or resource waste are solved, improving the efficiency of the device control.

In an optional embodiment of the present disclosure, the method further includes the following steps prior to acquiring the present load parameter of the motor in the above-described step 301.

Step 401: detecting whether an adjustment function is activated.

Whether the adjustment function is activated may be determined by detecting whether the device has received an adjustment instruction, or detecting whether an adjustment module is triggered, or detecting whether a parameter of the device exceed a threshold.

For example, the adjustment instruction may be transmitted to a present device via a terminal device; or a key module in the present device may be triggered, where a key may include a physical hardware key and may also include a virtual function key.

Step 402: in response to the adjustment function being activated, acquiring the present operating parameter and the load parameter of the motor in the device.

In an embodiment of the present disclosure, by activating the adjustment function, automatic matching between the operating parameter and the load parameter can be enabled or disabled at any time, improving flexibility of the device control. Meanwhile, resource waste and device damage resulting from the adjustment of the operating parameter in scenarios where such adjustment is unnecessary for the device can be avoided.

In an optional embodiment of the present disclosure, the retrieving the preset operating parameter matching the load parameter in the above-described step includes step 501 to step 502.

Step 501: acquiring a first mapping relationship.

The first mapping relationship is configured to indicate a relationship between at least one load parameter interval and an operating parameter value, where the load parameter interval includes a plurality of load parameter values.

For example, the first mapping relationship may indicate a relationship between a load current interval and a rotating speed value of the motor.

Step 502: based on the first mapping relationship, determining a target interval matching the target operating parameter.

When the target interval is determined, a preset operating parameter matching the target interval is retrieved.

Taking a load current value as an abscissa and the rotating speed of the motor as an ordinate, the load current value is divided into four intervals. Each of the four intervals is matched with a corresponding rotating speed of the motor. A first interval is from 0 to a coordinate point A1, and a rotating speed value corresponding to this interval is B1. B1 may be an initially set rotating speed. That is, in response to a detected present load current value falling within the first interval, the rotating speed of the motor matching the load current is determined to be B1. Settings of the remaining intervals are consistent with a function of the first interval, and will not be repeated herein.

Step 503: in response to the present load parameter of the motor not falling within the target interval, it is determined that the present load parameter does not match the preset load parameter.

That is, when the present load parameter does not match any load parameter within the target interval, it is determined that the present load parameter does not match the preset load parameter.

In an embodiment of the present disclosure, by establishing a mapping relationship between the load parameter and the operating parameter, rapid and accurate retrieval of the preset operating parameter can be achieved, improving the efficiency of the device control. Meanwhile, based on the interval of multiple thresholds of the device, the load parameter may be matched with multiple values, further improving the flexibility of device control.

In an optional embodiment of the present disclosure, based on the first mapping relationship in the above-described step 501, the retrieving the preset operating parameter matching the present load parameter further includes the following steps.

Step 601: acquiring a difference value between the present load parameter and the preset load parameter.

Step 602: in response to the present load parameter being greater than a difference value for the preset load parameter, retrieving an adjacent interval greater than the target interval; and based on the preset operating parameter matching the adjacent interval, retrieving the preset operating parameter matching the present load parameter.

Step 603: in response to the present load parameter being smaller than the difference value for the preset load parameter, retrieving an adjacent interval smaller than the target interval; and based on the preset operating parameter matching the adjacent interval, retrieving the preset operating parameter matching the present load parameter.

Specific examples are listed herein to illustrate how logic control is implemented based on the mapping relationship in the embodiments of the present disclosure. The motor has an initial operating parameter, for example, the motor has an initial rotating speed, and the mapping relationship between the operating parameter and the load parameter of the motor is established. For each interval, a fixed rotating speed value of the motor is used to define a current range and a load range of the motor matching the rotating speed of the motor. As shown in a table, a speed R1 of the motor matches the first interval of the load parameter, where a start point of this interval is at a load parameter value T1 and an end point is at a load parameter value T2. This mapping relationship may also include an overload load value to facilitate speed control of the motor, avoiding overload of the motor and malfunctions.

The control method is described by taking control of the left motor as an example. In a process of operating based on the speed R1 of the motor, a present load current of the motor is collected; based on a present load current value and the preset rotating speed, a present load parameter $T_{left}$ of the motor is calculated; and it is determined whether the present load parameter $T_{left}$ falls within the first interval of the load parameter. In response to a target load parameter falling within the first interval, the present rotating speed R1 is marked as the target rotating speed of the motor. In response to the target load parameter not falling within the first interval, it is determined whether the rotating speed needs to be increased or decreased. In response to $T_{left}$ being greater than T2, it is indicated that a load of the present mowing motor is relatively large, and thus the rotating speed R1 of the motor needs to be increased. For example, the rotating speed may be increased through closed-loop control by increasing an expected rotating speed value of a speed loop.

After increasing the rotating speed, an updated rotating speed value of the motor may be marked as a rotating speed R2. Following the above-described determination logic, a preset load parameter interval matching the rotating speed R2 is retrieved based on a preset relationship, for example, a second interval; and a target load based on the rotating speed R2 is detected, and it is determined whether the target load falls within the second interval. In response to the target load falling within the second interval, the present rotating speed R2 is marked as the target rotating speed of the motor. In response to the target load not falling within the second interval, the rotating speed is continued to be increased or decreased until a present load falls within a preset load interval or a load of a present motor is overloaded, and finally a rotating speed $R_{left}$ of a left mower matching the load is obtained.

As the control logic for the left motor described above, the control logic for the right motor is similar. Based on the preset load and the present load, it is determined whether the rotating speed needs to be increased or decreased, and finally a rotating speed of a right mower matching the load is obtained.

After determining a rotating speed of the mower matching the load, control logic processing may be terminated.

In an optional embodiment, the method provided in the present disclosure may further adjust the rotating speed of the motor based on a weight relationship between the left motor and the right motor. In response to the load of the left motor being greater than the load of the right motor, for example, grass clipping discharge is on the left side of the vehicle during a mowing task, a left rotating speed and a right rotating speed may be obtained from the above-described determination. Based on a weight, the rotating speed of the motor is set again such that the rotating speed of the left motor is greater than the rotating speed of the right motor. Thus, control efficiency can be improved.

In an optional embodiment of the present disclosure, the retrieving the preset operating parameter matching the present load parameter in the above-described step includes step 701 to step 703.

Step 701: acquiring a target direction.

The target direction is determined based on at least the load parameter, or environmental data, or a travelling direction.

For example, image recognition may be used to determine a direction in which present grass clipping has higher density; or an attitude angle of the vehicle may be detected to determine a present travelling direction of the vehicle, etc.

Step 702: determining a weight of each motor of the plurality of motors based on the target direction and the load parameter.

When determining the weight of each motor, a control direction corresponding to each motor may be obtained. Then it is analyzed whether a control direction of the present motor matches the target direction. The higher the degree of matching, the higher the weight.

Correspondingly, when determining the weight of each motor, the load parameter corresponding to each motor may be obtained. Then a load parameter of the present motor is analyzed. The higher the load, the higher the weight.

Correspondingly, the operating parameter, the control direction, or the load parameter of the present motor may also be comprehensively considered, thus determining that a weight of the present motor is higher.

After confirming the weight of each motor, identification information of the motor may be generated based on identity information and a weight value of the motor, facilitating subsequent retrieval and processing.

The identification information may be stored in a local storage module of the motor device or alternatively in the server side. If the identification information is stored in the server side, the motors of the plurality of devices may be retrieved at the server side, which facilitates the coordinated control of the motors of the plurality of devices and improves the management efficiency.

Step 703: adjusting the present operating parameter of the motor based on the weight and the preset operating parameter.

Based on the preset operating parameter and an adjusted weight, an operating parameter of the motor with a high weight shall be prioritized for adjustment, and subsequently, the operating parameters of the remaining motors are adjusted based on an adjusted operating parameter of the motor with the high weight.

In the method provided in the embodiments of the present disclosure, by setting weights of different motors, the motor with the high weight is prioritized for the adjustment. In this way, the operation of the device can be adjusted to more efficient, the efficiency of device control is improved, and operating resources of the device are saved.

In an optional embodiment of the present disclosure, adjusting the present operating parameter of the motor in the above-described step includes the following steps.

Step 801: acquiring a weight value of the present motor.

As described in step 702, the weight value of the present motor may be determined by retrieving the identification information of the present motor. The identification information of the motor may be stored in a database of the present motor or centrally stored in the server side.

Step 802: in response to the weight value of the present motor being greater than the weight values of the remaining motors, retrieving a preset operating parameter matching the present motor based on the load parameter.

To determine whether the weight value of the present motor is greater than the weight values of the remaining motors, a difference value may be determined by comparing the weight values of the plurality of motors one by one; alternatively, the determination may be made based on sequence information generated by preliminary sorting of the weight values.

Step 803: adjusting operating parameters of the remaining motors based on the preset operating parameter matching the present motor.

The operating parameters of the remaining motors may be adjusted by: adjusting a control manner based on the preset operating parameter of the present motor, and acquiring the load of the motor again prior to the adjustment; or adjusting the operating parameter, and acquiring the load of the motor.

The operating parameters of the remaining motors may be adjusted either based on a difference value between the preset operating parameter and the present operating parameter, or based on the preset threshold.

For example, the motor of the device includes a first motor and a second motor. Based on the load parameter, in response to a load of the first motor being greater than a load of the second motor, a weight of the first motor is set to be greater than a weight of the second motor, that is, the first motor is set as a master motor. The first motor performs matching and adjustment based on the preset rotating speed, and then the other motor performs adjustment following the first motor, with the rotating speed adjusted based on a preset difference value.

The adjustment based on the preset difference value may include setting a percentage. For example, the left motor is adjusted based on the preset rotating speed of the motor, and the right motor is set based on a rotating speed of the left motor after percentage adjustment, which is expressed by the formula: $R_{right}=R_{left}+K*R_{left}$, where $R_{right}$ denotes the rotating speed of the right motor, $R_{left}$ denotes the rotating speed of the left motor, and K represents a difference parameter. It is recommended to set K within a range of 10% to 30%, which achieves an effect that the higher the rotating speed, the larger the set rotating speed difference.

In an optional embodiment of the present disclosure, the adjusting the present operating parameter in step 303 of the method provided in the present disclosure further includes the following steps.

Step 901: acquiring the adjusted operating parameter, collecting the present load parameter of the motor and a M-th preset load parameter matching the adjusted operating parameter.

After the present operating parameter is adjusted based on the preset operating parameter, the above-described step 301 to step 303 may be further repeated, that is, closed-loop processing is performed until the load is matched.

Step 902: in response to the M-th preset load parameter matching the present load, marking the adjusted operating parameter as the target operating parameter, and terminating this round of adjustment and processing.

An operating parameter, a current of the motor, and a load of the motor after the present matching process may be stored, to facilitate a subsequent statistical analysis of historical data and actual adjustment results based on the big data, and re-optimize the above-described first mapping relationship.

Step 903: in response to the M-th preset load parameter not matching the present load, performing a next round of adjustment until the present load parameter matching the preset load parameter or the present load parameter is greater than or equal to an overload parameter.

The method provided in the present disclosure continuously adjust the operating parameter of the motor by adopting the closed-loop method until the preset load parameter of the motor matches the present load parameter, that is, an operating manner of the motor matches an operating manner required for performing the task. Specifically, when the load of the motor increases, the rotating speed increases, which is consistent with an actual working condition of the electric tool and improves the efficiency.

In an optional embodiment of the present disclosure, the adjusting the present operating parameter in the above-described step 303 further includes the following steps.

Step 1001: based on the preset load parameter, determining a preset current value, and collecting a present current value of the motor.

Since the load parameter may be set based on the current and the rotating speed, when the load and the rotating speed of the motor are determined, the preset current value of the motor may also be determined accordingly.

Step 1002: based on the preset current value and the present current value of the motor, and the preset operating parameter and the present operating parameter of the motor, implementing a double closed-loop control strategy consisting of an outer loop for the operating parameter and an inner loop for the current to complete the adjustment of the present operating parameter of the motor.

Inner loop control enables dynamic adjustment of current changes, and outer loop control enables dynamic adjustment of operating parameter changes, ultimately achieving the matching between the preset load parameter and the present load parameter of the motor.

In an embodiment of the present disclosure, control of the rotating speed may be completed through double closed-loop processing, which includes: when the processor acquires the target rotating speed, double closed-loop control of the current and the rotating speed is adopted to adjust the rotating speed of the motor, with a current loop serving as the inner loop and a speed loop serving as the outer loop. The actual rotating speed fed back by the motor is received, and the actual rotating speed is compared with an actual expected rotating speed of the motor to obtain a rotating speed error of each wheel. The rotating speed error is then transmitted to the processor, in such a manner that a motor driver drives a corresponding motor to rotate, achieving the closed loop of the speed outer loop. For example, an expected current value I1 may be calculated based on an expected speed R1, and a PWM duty ratio of the voltage is adjusted through the current loop. Both the speed loop and the current loop adopt PI feedback control to complete an increase or a decrease of the rotating speed of the motor.

In the control method for the device provided in the embodiments of the present disclosure, the operating parameter and the present load parameter of the motor are detected. In response to the present load parameter not matching the preset load parameter, the preset operating parameter is retrieved through the present load parameter. Based on the preset operating parameter, the present operating parameter is adjusted to achieve the matching between the present load parameter and the preset load parameter in the motor. In this way, the technical problems in the related art such as the motor blocking, the shutdown, the failure, or the resource waste are solved, improving the efficiency of the device control.

It should be understood that although steps in each of the flowcharts are illustrated in a sequence indicated by an arrow, these steps are not necessarily executed in the sequence indicated by the arrow. Unless explicitly stated herein, execution of these steps is not strictly limited to the sequence, and these steps may be performed in other sequences. In addition, at least a part of the steps in the figures may include several sub-steps or several stages. These sub-steps or stages are not necessarily executed and completed at the same time, but may be executed at different times. These sub-steps or stages are also not necessarily executed sequentially one by one, but may be executed in turn or alternately with other steps, or sub-steps of other steps, or at least a part of the stages.

In an embodiment of the present disclosure, a control apparatus is provided. The control apparatus includes a data collection module, a data matching module, and a data adjustment module. The data collection module is configured to acquire the present load parameter of the motor and the preset load parameter matching the target operating parameter in response to the motor operating with the target operating parameter. The data matching module is configured to acquire the preset operating parameter matching the present load parameter in response to the present load parameter not matching the preset load parameter. The data adjustment module is configured to adjust the present operating parameter based on the preset operating parameter to achieve the matching between the present load parameter and the preset load parameter of the motor. The motor is configured to control the tool in the device. The operating parameter includes at least one of the rotating speed of the motor, the torque of the motor, or the control signal of the motor. The load parameter is configured to indicate the load borne by the motor during the operation.

In the control apparatus for the device provided in the embodiments of the present disclosure, the operating parameter and the present load parameter of the motor are detected. In response to the present load parameter not matching the preset load parameter, the preset operating parameter is retrieved through the present load parameter. Based on the preset operating parameter, the present operating parameter is adjusted to achieve the matching between the present load parameter and the preset load parameter in the motor. In this way, the technical problems in the related art such as the motor blocking, the shutdown, the failure, or the resource waste are solved, improving the efficiency of the device control.

For specific limitations of the above-described device, reference may be made to limitations of the control method for the device, which will not be repeated here. Each module in the above-described device may be implemented in whole or in part by software, hardware and a combination thereof. The above modules can be embedded in or independent of a processor in a computer device in the form of hardware, or stored in a memory in the computer device in the form of software, such that the processor can invoke and execute operations corresponding to the above modules.

## Embodiment 6

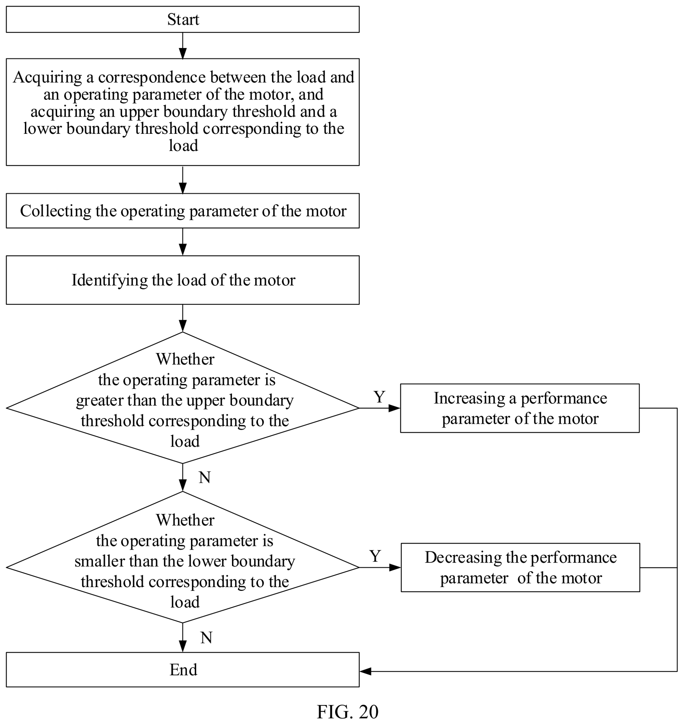

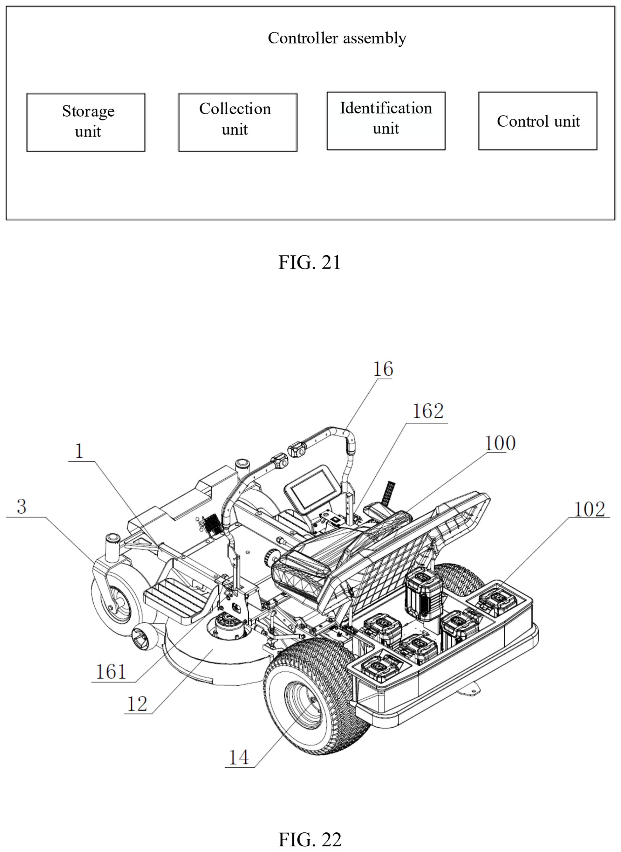

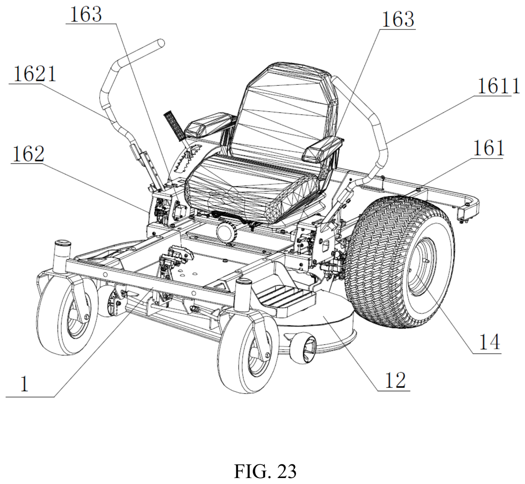

As illustrated in FIG. 20 to FIG. 23, the present disclosure further provides an outdoor working vehicle. The outdoor working vehicle includes a vehicle frame 1, and a working mechanism 12, a drive mechanism 14, a bearing mechanism 100, a power supply system 102, and a control mechanism 16 connected to the vehicle frame 1. The drive mechanism 14 includes a left drive assembly, a right drive assembly, and a traveling wheel assembly 3. The control mechanism 16 includes a left control assembly 161 and a right control assembly 162. The left control assembly 161 and the right control assembly 162 are respectively coupled to the left drive assembly and the right drive assembly in a one-to-one correspondence, to separately control an operation state of the left drive assembly and the right drive assembly. The left control assembly 161 and the right control assembly 162 respectively include a left control lever 1611, a right control lever 1621, and a corresponding rotating detection assembly 163.

The outdoor working vehicle further includes a controller assembly. The working mechanism 12 includes a working motor and an output assembly configured to be driven by the working motor to perform a specific functional operation; and a controller assembly configured to control an operation state of the working motor.

The working motor has a plurality of operating parameters, and the controller assembly has a plurality of control strategies for the working motor, the plurality of control strategies correspondingly matching the plurality of operating parameters. The controller assembly includes a collection unit, an identification unit, a storage unit and a control unit.

The collection unit is configured to collect at least one of the operating parameters of the working motor during operation of the working motor, to acquire an operating condition of the working motor. The operating condition of the working motor includes a duty ratio, a current, a power and the like of the working motor.

The identification unit is configured to identify a load of the working motor based on the collected operating parameter, to acquire a load condition of the working motor in real time. The load condition of the working motor includes a high load, a low load, load changes and the like.

The storage unit is configured to pre-store a correspondence between the operating parameters of the working motor and a load change and pre-store the upper boundary threshold and the lower boundary threshold of the operating parameter corresponding to the load.

The control unit is configured to determine whether a detected actual load matches an actual operating parameter of the working motor based on the correspondence stored in the storage unit, and adjust performance parameters of the working motor by using a matched control strategy, in response to the actual operating parameter not falling within a range formed by a preset upper boundary threshold and a preset lower boundary threshold of the operating parameter corresponding to the actual load.

In the controller assembly provided in the present disclosure, division of the above-described unit modules is merely an exemplary illustration. The collection unit, the identification unit, the control unit, and the storage unit may be integrated into a single unit module to achieve data collection and motor control. Preferably, the collection unit, the identification unit, the control unit, and the storage unit are integrated in a single chip microcomputer (MCU).

According to the present disclosure, the actual condition of the load is identified by collecting the relevant parameters when the mowing motor is in operation, in such a manner that the low power and the low rotating speed output under the low load, and the high power and the high rotating speed output under the high load are achieved, enabling the motor control and the output adjustment to be more accurate. Thus, the effect of reducing the invalid energy consumption and improving the endurance capability of the entire mower is achieved.

In an embodiment, the plurality of operating parameters of the working motor include a duty ratio parameter, a rotating speed parameter, a current parameter, and a power parameter. The performance parameters of the working motor include a rotating speed parameter, a current parameter, a power parameter, and a torque parameter. The matched control strategy of the working motor includes a rotating speed closed-loop control strategy, a current closed-loop control strategy, a power closed-loop control strategy, a torque closed-loop control strategy and an PWM duty ratio open-loop control strategy.

The storage unit is further configured to store a correspondence between the performance parameters and the operating parameters of the working motor.

Exemplarily, the correspondence between the performance parameters and the operating parameters of the working motor includes a correspondence between the rotating speed and the duty ratio, a correspondence between the rotating speed and the current, and a correspondence between the rotating speed and the power.

Exemplarily, the correspondence between the performance parameters and the operating parameters of the working motor includes a correspondence between the current and the duty ratio and a correspondence between the current and the rotating speed.

Exemplarily, the correspondence between the performance parameters and the operating parameters of the working motor includes a correspondence between the power and the duty ratio and a correspondence between the power and the rotating speed.

Exemplarily, the correspondence between the performance parameters and the operating parameters of the working motor includes a correspondence between the torque and the duty ratio and a correspondence between the torque and the rotating speed.

Exemplarily, rotating speed points or torque points, and/or current points or torque points, and/or power points or torque points under different operating parameter states are selected for straight line fitting or curve fitting, to obtain a required target adaptive control track of the load.

Exemplarily, current points or torque points, and/or rotating speed points or rotating speed points under different operating parameter states are selected for straight line fitting or curve fitting, to obtain a required target adaptive control track of the load.

Exemplarily, power points or torque points, and/or rotating speed points or torque points under different operating parameter states are selected for straight line fitting or curve fitting, to obtain a required target adaptive control track of the load.

Exemplarily, rotating speed points or torque points, and/or power points or torque points under different operating parameter states are selected for straight line fitting or curve fitting, to obtain a required target adaptive control track of the load.

Exemplarily, the control unit is configured to increase the performance parameter of the working motor in response to determining that the actual operating parameter is greater than the upper boundary threshold corresponding to the load.

Exemplarily, the control unit is configured to decrease the performance parameter of the working motor in response to determining that the actual operating parameter is smaller than the lower boundary threshold corresponding to the load.

Exemplarily, the control unit is configured to, before determining whether the actual operating parameter falls within the range formed by the preset upper boundary threshold and the preset lower boundary threshold of the operating parameter corresponding to the actual load, determine whether the working motor is currently in a rotating speed adjusting process.

The control unit is configured to adjust the rotating speed by Proportional, Integral, Derivative Control (PID), in response to determining that the working motor is in the rotating speed adjusting process.

The control unit is configured to determine an upper boundary and a lower boundary of the operating parameter of the working motor by linear interpolation calculation or direct function calculation after looking up a table according to a present performance parameter of the working motor, in response to determining that the working motor is not in the rotating speed adjusting process.

In some embodiments of the present disclosure, the working mechanism 12 of the outdoor working vehicle may be other work attachments, such as a snow removal assembly. In this case, strictly speaking, the outdoor working vehicle is no longer merely a riding mowing device, but rather a riding snow remover, which can perform different tasks based on the connected working mechanism 12. Of course, the outdoor working vehicle may also be other types of tool device, such as an agricultural device, a cleaning device, an all-terrain vehicle, etc.

The controller assembly in this embodiment includes a memory and a processor. The memory has computer instructions stored thereon. The processor is connected to the memory and is configured to acquire and execute the computer instructions from the memory to implement the control method.

According to the present disclosure, the actual condition of the load is identified by collecting the relevant parameters when the mowing motor is in operation, in such a manner that the low power and the low rotating speed output under the low load, and the high power and the high rotating speed output under the high load are achieved, enabling the motor control and output adjustment to be more accurate. Thus, the effect of reducing the invalid energy consumption and improving the endurance capability of the entire mower is achieved. No manual intervention is required, and correspondingly, the mower features the high degree of intelligence, the easy operation, and the excellent safety performance.

When the function is implemented in a form of software functional unit and is sold or used as a standalone product, it can be stored in a computer-readable storage medium. Based on this understanding, all or part of the technical solutions according to the embodiments of the present disclosure, or the part thereof that contributes to the prior art, can be embodied in the form of a software product. The computer software product may be stored in a storage medium and contain instructions to enable a computer device (which may be a personal computer, a server, or a network device, etc.) to perform all or part of the steps of the method described in each of the embodiments of the present disclosure. The above-described storage medium may include various media capable of storing program codes, such as a Universal Serial Bus (USB) flash drive, a removable hard disk, a Read-Only Memory (ROM), a Random Access Memory (RAM), a diskette, or an optical disk.

Finally, it should be noted that the above-mentioned embodiments are merely specific embodiments of the present disclosure, and are used to explain the technical solutions of the present disclosure rather than to limit the present disclosure. The protection scope of the present disclosure is not limited thereto. Although the present disclosure has been described in detail with reference to the above-described embodiments, for those skilled in the art can still modify or easily conceive of changes to the technical solutions described in the above-described embodiments within the technical scope disclosed in the present disclosure, or perform equivalent replacements on part of the technical features therein. These modifications, changes or replacements do not cause the essence of corresponding technical solutions to deviate from the spirit and scope of the technical solutions of the embodiments of the present disclosure, and shall be included in the scope of the present disclosure. Therefore, the protection scope of the present disclosure shall be subject to the protection scope of the claims.

**Claims**

**1.** An adaptive control method for a load of a motor, the method being applied to a motor control apparatus, the method comprising:

collecting an operating parameter of the motor;
identifying the load of the motor based on the operating parameter of the motor; and
based on a correspondence between the operating parameter and the load, increasing a rotating speed of the motor in response to the operating parameter being greater than an upper boundary threshold corresponding to the load, and decreasing the rotating speed of the motor in response to the operating parameter being smaller than a lower boundary threshold corresponding to the load,

wherein the method further comprises, prior to collecting the operating parameter of the motor: acquiring the correspondence between the operating parameter and the load, and acquiring the upper boundary threshold and the lower boundary threshold corresponding to the load.

2. The adaptive control method for the load of the motor according to claim 1, wherein the operating parameter comprises one or all of a duty ratio, a current, and a power.

3. The adaptive control method for the load of the motor according to claim 2, wherein when the operating parameter comprises the duty ratio, the acquiring the correspondence between the operating parameter and the load and acquiring the upper boundary threshold and the lower boundary threshold corresponding to the load comprises:

step 10: presetting a duty ratio $d_0$% of the motor, and acquiring a rotating speed characteristic curve corresponding to the motor;

step 20: presetting a duty ratio $d_1$% and a duty ratio variable $\Delta d$ of the motor, and acquiring a rotating speed characteristic curve corresponding to the motor, where $d_1 = d_0 + \Delta d$;

step 30: repeating the step 20 until the duty ratio of the motor reaches 100%, and acquiring rotating speed characteristic curves corresponding to the motor under all preset duty ratios;

step 40: mapping rotating speed-torque characteristic curves under different duty ratio states to a rotating speed-duty ratio coordinate system; and

step 50: selecting rotating speed points or torque points under the different duty ratio states for straight line fitting or curve fitting.

4. The adaptive control method for the load of the motor according to claim 2, wherein when the operating parameter comprises the duty ratio, the acquiring the correspondence between the operating parameter and the load and acquiring the upper boundary threshold and the lower boundary threshold corresponding to the load comprises:

step 10: presetting a rotating speed $n_0$% of the motor, acquiring a rotating speed characteristic curve corresponding to the motor, and recording duty ratios under different torque scales;

step 20: presetting a rotating speed $n_1$% and a rotating speed variable $\Delta n$ of the motor, and acquiring a rotating speed characteristic curve corresponding to the motor, where $n_1 = n_0 + \Delta n$;

step 30: repeating the step 20 until the rotating speed of the motor reaches a maximum rotating speed for a no-load state, and acquiring rotating speed characteristic curves corresponding to the motor under all preset rotating speeds;

step 40: mapping rotating speed-torque characteristic curves under different rotating speed states to a rotating speed-duty ratio coordinate system; and

step 50: selecting rotating speed points or torque points under different duty ratio states for straight line fitting or curve fitting.

5. The adaptive control method for the load of the motor according to claim 2, wherein when the operating parameter comprises the current, the acquiring the correspondence between the operating parameter and the load and acquiring the upper boundary threshold and the lower boundary threshold corresponding to the load comprises:

step 10: presetting a rotating speed $n_0$% of the motor, and acquiring a rotating speed-torque characteristic curve and a current-torque characteristic curve corresponding to the motor;

step 20: presetting a rotating speed $n_1$% and a rotating speed variable $\Delta n$ of the motor, and acquiring a rotating speed-torque characteristic curve and a current-torque characteristic curve corresponding to the motor, where $n_1 = n_0 + \Delta n$;

step 30: repeating the step 20 until the rotating speed of the motor reaches a maximum rotating speed for a no-load state, and acquiring rotating speed-torque characteristic curves and current-torque characteristic curves corresponding to the motor under all preset rotating speeds;

step 40: mapping the rotating speed-torque characteristic curves and the current-torque characteristic curves under different rotating speed states to a rotating speed-current coordinate system; and

step 50: selecting rotating speed points or torque points, and current points or torque points for straight line fitting or curve fitting.

6. The adaptive control method for the load of the motor according to claim 2, wherein when the operating parameter comprises the power, the acquiring the correspondence between the operating parameter and the load and acquiring the upper boundary threshold and the lower boundary threshold corresponding to the load comprises:

step 10: presetting a rotating speed $n_0$% of the motor, and acquiring a rotating speed-torque characteristic curve and a power-torque characteristic curve corresponding to the motor;

step 20: presetting a rotating speed $n_1$% and a rotating speed variable $\Delta n$ of the motor, and acquiring a rotating speed-torque characteristic curve and a power-torque characteristic curve corresponding to the motor, where $n_1 = n_0 + \Delta n$;

step 30: repeating the step 20 until the rotating speed of the motor reaches a maximum rotating speed for a no-load state, and acquiring rotating speed-torque characteristic curves and power-torque characteristic curves corresponding to the motor under all preset rotating speeds;

step 40: mapping the rotating speed-torque characteristic curves and the power-torque characteristic curves under different rotating speed states to a rotating speed-power coordinate system; and

step 50: selecting rotating speed points or torque points, and power points or torque points for straight line fitting or curve fitting.

**7.** An adaptive control method for a load of a motor, the method being applied to a motor control apparatus, the method comprising:

collecting an operating parameter of the motor, the operating parameter comprising a duty ratio and/or a rotating speed;

identifying the load of the motor based on the operating parameter; and

based on a correspondence between the operating parameter and the load, increasing a current of the motor in response to the operating parameter being greater than an upper boundary threshold corresponding to the load, and decreasing the current of the motor in response to the operating parameter being smaller than a lower boundary threshold corresponding to the load;

wherein the method further comprises, prior to collecting the operating parameter of the motor: acquiring the correspondence between the operating parameter and the load, and acquiring the upper boundary threshold and the lower boundary threshold corresponding to the load.

**8.** The adaptive control method for the load of the motor according to claim 7, wherein when the operating parameter comprises the duty ratio, the method comprises:

step 10: acquiring a correspondence between the duty ratio and the load, and acquiring the upper boundary threshold and the lower boundary threshold corresponding to the load;

step 20: collecting the operating parameter of the motor, wherein the collecting the operating parameter of the motor comprises detecting a present current and acquiring a present duty ratio;

step 30: preprocessing the current, and identifying the load of the motor based on the duty ratio;

step 40: determining whether the motor is currently in a current adjustment process, adjusting the current by Proportional, Integral, Derivative Control (PID) and returning to the step 20 in response to determining that the motor is currently in the current adjustment process, and determining an upper boundary threshold and a lower boundary threshold corresponding to the duty ratio based on the present current and proceeding to step 50 in response to determining that the motor is not currently in the current adjustment process;

step 50: determining whether the duty ratio is greater than the upper boundary threshold corresponding to the load based on the correspondence between the duty ratio and the load, increasing the current of the motor and returning to the step 20 in response to determining that the duty ratio is greater than the upper boundary threshold corresponding to the load, and proceeding to step 60 in response to determining that the duty ratio is not greater than the upper boundary threshold corresponding to the load; and

step 60: determining whether the duty ratio is smaller than the lower boundary threshold corresponding to the load, decreasing the current of the motor and returning to the step 20 in response to determining that the duty ratio is smaller than the lower boundary threshold corresponding to the load, and returning to the step 20 in response to determining that the duty ratio is not smaller than the lower boundary threshold corresponding to the load.

**9.** The adaptive control method for the load of the motor according to claim 7, wherein when the operating parameter comprises the rotating speed, the method comprises:

step 10: acquiring a correspondence between the rotating speed and the load, and acquiring the upper boundary threshold and the lower boundary threshold corresponding to the load;

step 20: collecting the operating parameter of the motor, wherein the collecting the operating parameter of the motor comprises detecting a present current and a rotating speed;

step 30: preprocessing the current and the rotating speed, and identifying the load of the motor based on the rotating speed;

step 40: determining whether the motor is currently in a current adjustment process, adjusting the current by Proportional, Integral, Derivative Control (PID) and returning to the step 20 in response to determining that the motor is currently in a current adjustment process, and determining an upper boundary threshold and a lower boundary threshold corresponding to the rotating speed based on the present current and proceeding to step 50 in response to determining that the motor is not currently in a current adjustment process;

step 50: determining whether the rotating speed is greater than the upper boundary threshold corresponding to the load based on the correspondence between the rotating speed and the load, increasing the current of the motor and returning to the step 20 in response to determining that the rotating speed is greater than the upper boundary threshold corresponding to the load, and proceeding to step 60 in response to determining that the rotating speed is not greater than the upper boundary threshold corresponding to the load; and

step 60: determining whether the rotating speed is smaller than the lower boundary threshold corresponding to the load, decreasing the current of the motor and returning to the step 20 in response to determining that the rotating speed is smaller than the lower boundary threshold corresponding to the load, and returning to the step 20 in response to determining that the rotating speed is not smaller than the lower boundary threshold corresponding to the load.

10. The adaptive control method for the load of the motor according to claim 7, wherein when the operating parameter comprises the duty ratio, acquiring a correspondence between the duty ratio and the load of the motor and acquiring the upper boundary threshold and the lower boundary threshold corresponding to the load comprises:

step 10: presetting a duty ratio $d_0$% of the motor, and acquiring a current characteristic curve corresponding to the motor;

step 20: presetting a duty ratio $d_1$% and a duty ratio variable $\Delta d$ of the motor, and acquiring a current characteristic curve corresponding to the motor, where $d_1=d_0+\Delta d$;

step 30: repeating the step 20 until the duty ratio of the motor reaches 100%, and acquiring current characteristic curves corresponding to the motor under all preset duty ratios;

step 40: mapping current-torque characteristic curves in different duty ratio states to a current-duty ratio coordinate system; and

step 50: selecting current points or torque points under different duty ratio states for straight line fitting or curve fitting.

11. The adaptive control method for the load of the motor according to claim 7, wherein when the operating parameter comprises the duty ratio, acquiring a correspondence between the duty ratio and the load of the motor and acquiring the upper boundary threshold and the lower boundary threshold corresponding to the load comprises:

step 10: presetting a current $I_0$% of the motor, acquiring a current characteristic curve corresponding to the motor, and recording duty ratios under different torque scales;

step 20: presetting a current $I_1$% and a duty ratio variable $\Delta I$ of the motor, and acquiring a current characteristic curve corresponding to the motor, where $I_1=I_0+\Delta I$;

step 30: repeating the step 20 until the motor reaches a maximum duty ratio for a no-load current, and acquiring current characteristic curves corresponding to the motor under all preset currents;

step 40: mapping current-torque characteristic curves under different current states to a current-duty ratio coordinate system; and

step 50: selecting current points or torque points under the different duty ratio states for straight line fitting or curve fitting.

12. The adaptive control method for the load of the motor according to claim 7, wherein when the operating parameter comprising the rotating speed, acquiring a correspondence between the rotating speed and the load of the motor and acquiring the upper boundary threshold and the lower boundary threshold corresponding to the load comprises:

step 10: presetting a rotating speed $n_0$% of the motor, and acquiring a rotating speed-torque characteristic curve and a current-torque characteristic curve corresponding to the motor;

step 20: presetting a rotating speed $n_1$% and a rotating speed variable $\Delta n$ of the motor, and acquiring a rotating speed-torque characteristic curve and a current-torque characteristic curve corresponding to the motor, where $n_1=n_0+\Delta n$;

step 30: repeating step 20 until the rotating speed of the motor reaches a maximum rotating speed for a no-load state, and acquiring rotating speed-torque characteristic curves and current-torque characteristic curves corresponding to the motor under all preset rotating speeds;

step 40: mapping rotating speed-torque characteristic curves and current-torque characteristic curves under different rotating speed states to a rotating speed-current coordinate system; and

step 50: selecting rotating speed points or torque points, and current points or torque points for straight line fitting or curve fitting.

13. An adaptive control method for a load of a motor, the method being applied to a motor control apparatus, the method comprising:

acquiring an adaptive control track of the load of the motor based on an operating parameter of the motor;

acquiring a correspondence between the operating parameter and the load of the motor, and acquiring an upper boundary threshold and a lower boundary threshold corresponding to the load;

collecting the operating parameter of the motor;

identifying the load of the motor based on the operating parameter of the motor; and

based on the correspondence between the operating parameter and the load, increasing a power of the motor in response to the operating parameter being greater than the upper boundary threshold corresponding to the load, and decreasing the power of the motor in response to the operating parameter being smaller than the lower boundary threshold corresponding to the load.

**14.** The adaptive control method for the load of the motor according to claim 13, wherein the acquiring the adaptive control track of the load of the motor based on the operating parameter of the motor comprises:

selecting power points or torque points under different operating parameters, and establishing a table based on each calibrated power point or torque point;

determining which grid of the table the motor falls into based on a present power and a present rotating speed of the motor, and obtaining an upper boundary threshold and a lower boundary threshold corresponding to the rotating speed after the load of the motor changes;

resetting a new target power when an actual rotating speed of the motor exceeds a range formed by a preset upper boundary threshold and a preset lower boundary threshold; and

transitioning an actual duty ratio onto the adaptive control track of the load by means of straight line fitting or curve fitting.

**15.** The adaptive control method for the load of the motor according to claim 13, wherein the operating parameter comprises a duty ratio and/or a rotating speed.

**16.** The adaptive control method for the load of the motor according to claim 15, wherein when the operating parameter comprises the duty ratio, the acquiring the correspondence between the operating parameter and the load and acquiring the upper boundary threshold and the lower boundary threshold corresponding to the load comprises:

step 10: presetting a duty ratio $d_0$% of the motor, and acquiring a power characteristic curve corresponding to the motor;

step 20: presetting a duty ratio $d_1$% and a duty ratio variable $\Delta d$ of the motor, and acquiring a power characteristic curve corresponding to the motor, where $d_1=d_0+\Delta d$;

step 30: repeating the step 20 until the duty ratio of the motor reaches 100%, and acquiring power characteristic curves corresponding to the motor under all preset duty ratios;

step 40: mapping power-torque characteristic curves under different duty ratio states to a power-duty ratio coordinate system; and

step 50: selecting power points or torque points under the different duty ratio states for straight line fitting or curve fitting.

**17.** The adaptive control method for the load of the motor according to claim 15, wherein when the operating parameter comprises the duty ratio, the acquiring the correspondence between the operating parameter and the load and acquiring the upper boundary threshold and the lower boundary threshold corresponding to the load comprises:

step 10: presetting a power $P_0$% of the motor, acquiring a rotating speed characteristic curve corresponding to the motor, and recording duty ratios under different torque scales;

step 20: presetting a power $P_1$% and a power variable $\Delta P$ of the motor, and acquiring a power characteristic curve corresponding to the motor, where $P_1=P_0+\Delta P$;

step 30: repeating the step 20 until the motor reaches a maximum duty ratio for a no-load power, and acquiring power characteristic curves corresponding to the motor under all preset powers;

step 40: mapping power-torque characteristic curves under different power states to a power-duty ratio coordinate system; and

step 50: selecting rotating speed points or torque points under the different duty ratio states for straight line fitting or curve fitting.

**18.** The adaptive control method for the load of the motor according to claim 15, wherein when the operating parameter comprises the rotating speed, the acquiring the correspondence between the operating parameter and the load and acquiring the upper boundary threshold and the lower boundary threshold corresponding to the load comprises:

step 10: presetting a rotating speed $n_0$% of the motor, and acquiring a rotating speed-torque characteristic curve and a power-torque characteristic curve corresponding to the motor;

step 20: presetting a rotating speed $n_1\%$ and a rotating speed variable $\Delta n$ of the motor, and acquiring a rotating speed-torque characteristic curve and a power-torque characteristic curve corresponding to the motor, where $n_1=n_0+\Delta n$;

step 30: repeating the step 20 until the rotating speed of the motor reaches a maximum rotating speed for a no-load state, and acquiring rotating speed-torque characteristic curves and power-torque characteristic curves corresponding to the motor under all preset rotating speeds;

step 40: mapping rotating speed-torque characteristic curves and power-torque characteristic curves under different rotating speed states to a rotating speed-power coordinate system; and

step 50: selecting rotating speed points or torque points, and power points or torque points for straight line fitting or curve fitting.

19. An adaptive control method for a load of a motor, the method being applied to a motor control apparatus, the method comprising:

collecting an operating parameter of the motor;

identifying the load of the motor based on the operating parameter of the motor; and

based on a correspondence between the operating parameter and the load, increasing a torque of the motor in response to the operating parameter being greater than an upper boundary threshold corresponding to the load, and decreasing the torque of the motor in response to the operating parameter being smaller than a lower boundary threshold corresponding to the load;

wherein the method further comprises, prior to collecting the operating parameter of the motor: acquiring the correspondence between the operating parameter and the load, and acquiring the upper boundary threshold and the lower boundary threshold corresponding to the load.

20. The adaptive control method for the load of the motor according to claim 19, wherein the operating parameter comprises a duty ratio and/or a rotating speed.

21. The adaptive control method for the load of the motor according to claim 20, wherein when the operating parameter comprises the duty ratio, the acquiring the correspondence between the operating parameter and the load and acquiring the upper boundary threshold and the lower boundary threshold corresponding to the load comprises:

step 10: presetting a duty ratio $d_0\%$ of the motor, and acquiring a torque characteristic curve corresponding to the motor;

step 20: presetting a duty ratio $d_1\%$ and a duty ratio variable $\Delta d$ of the motor, and acquiring a torque characteristic curve corresponding to the motor, where $d_1=d_0+\Delta d$;

step 30: repeating the step 20 until the duty ratio of the motor reaches 100%, and acquiring torque characteristic curves corresponding to the motor under all preset duty ratios;

step 40: mapping torque-rotating speed characteristic curves under different duty ratio states to a torque-duty ratio coordinate system; and

step 50: selecting rotating speed points or torque points under the different duty ratio states for straight line fitting or curve fitting.

22. The adaptive control method for the load of the motor according to claim 20, wherein when the operating parameter comprises the duty ratio, the method comprises:

step 10: acquiring the correspondence between the operating parameter and the load, and acquiring the upper boundary threshold and the lower boundary threshold corresponding to the load;

step 20: acquiring the operating parameter of the motor, wherein the acquiring the operating parameter of the motor comprises detecting a present rotating speed;

step 30: preprocessing the rotating speed, and identifying the load of the motor based on the operating parameter of the motor;

step 40: obtaining an optimal target duty ratio based on the rotating speed and a target torque;

step 50: determining whether the motor is currently in a duty ratio adjustment process, adjusting a present duty ratio and returning to the step 20 in response to determining that the motor is currently in the duty ratio adjustment process, determining an operating condition rotating speed and an upper boundary threshold and a lower boundary threshold corresponding to the duty ratio based on a present torque and proceeding to step 60 in response to determining that the motor is not currently in the duty ratio adjustment process;

step 60: determining whether the duty ratio is greater than the upper boundary threshold corresponding to the load or the rotating speed is smaller than the lower boundary threshold corresponding to the load based on the correspondence between the operating parameter and the load, increasing the torque of the motor and returning to the step 20 in response to determining that the duty ratio is greater than the upper boundary threshold corresponding to the load or the rotating speed is smaller than the lower boundary threshold corresponding to the load, and proceeding to step 70 in response to determining that the duty ratio is not greater than the upper boundary threshold corresponding to the load and the rotating speed is not smaller than the lower boundary threshold corresponding to the load; and

step 70: determining whether the duty ratio is smaller than the lower boundary threshold corresponding to the load or the rotating speed is greater than the lower boundary threshold corresponding to the load, decreasing the torque of the motor and returning to the step 20 in response to determining that the duty ratio is smaller than the lower boundary threshold corresponding to the load or the rotating speed is greater than the lower boundary threshold corresponding to the load, and returning to the step 20 in response to determining that the duty ratio is not smaller than the lower boundary threshold corresponding to the load and the rotating speed is not greater than the lower boundary threshold corresponding to the load.

**23.** The adaptive control method for the load of the motor according to claim 20, wherein when the operating parameter comprises the rotating speed, the acquiring the correspondence between the operating parameter and the load and acquiring the upper boundary threshold and the lower boundary threshold corresponding to the load comprises:

step 10: presetting a rotating speed $n_0$% of the motor, and acquiring a torque-rotating speed efficiency MAP corresponding to the motor;

step 20: presetting a rotating speed $n_1$% and a rotating speed variable $\Delta n$ of the motor, and acquiring a torque-rotating speed efficiency MAP corresponding to the motor, where $n_1 = n_0 + \Delta n$;

step 30: repeating the step 20 until the rotating speed of the motor reaches a maximum rotating speed for a no-load state, and acquiring torque-rotating speed efficiency MAPs corresponding to the motor under all preset rotating speeds;

step 40: plotting contour diagrams of efficiency based on torque-rotating speed efficiency MAPs under different rotating speed states to obtain a torque-rotating speed efficiency MAP; and

step 50: selecting rotating speed points or torque points, and power points or torque points for straight line fitting or curve fitting.

**24.** The adaptive control method for the load of the motor according to claim 20, wherein when the operating parameter comprises the rotating speed, the method comprises:

step 10: acquiring the correspondence between the operating parameter and the load, and acquiring the upper boundary threshold and the lower boundary threshold corresponding to the load;

step 20: acquiring the operating parameter of the motor, wherein the acquiring the operating parameter of the motor comprises detecting a present rotating speed and a current;

step 30: preprocessing the rotating speed and the current, and identifying the load of the motor based on the operating parameter of the motor;

step 40: obtaining an optimal target current based on the rotating speed and a target torque;

step 50: determining whether the motor is currently in a current adjustment process, adjusting a present current and returning to the step 20 in response to determining that the motor is currently in the current adjustment process, determining an operating condition rotating speed and an upper boundary threshold and a lower boundary threshold corresponding to the current based on a present torque and proceeding to step 60 in response to determining that the motor is not currently in the current adjustment process;

step 60: determining whether the current is greater than the upper boundary threshold corresponding to the load or the rotating speed is smaller than the lower boundary threshold corresponding to the load based on the correspondence between the operating parameter and the load, increasing the torque of the motor and returning to the step 20 in response to determining that the current is greater than the upper boundary threshold corresponding to the load or the rotating speed is smaller than the lower boundary threshold corresponding to the load, and proceeding to step 70 in response to determining that the current is not greater than the upper boundary threshold corresponding to the load and the rotating speed is not smaller than the lower boundary threshold corresponding to the load; and

step 70: determining whether the current is smaller than the lower boundary threshold corresponding to the load or the rotating speed is greater than the lower boundary threshold corresponding to the load, decreasing the torque of the motor and returning to the step 20 in response to determining that the current is smaller than the lower boundary threshold corresponding to the load or the rotating speed is greater than the lower boundary threshold corresponding to the load, and returning to the step 20 in response to determining that the current is not smaller than the lower boundary threshold corresponding to the load and the rotating speed is not greater than the lower boundary threshold corresponding to the load.

**25.** An adaptive control method for a load of a motor, the method being applied to a motor apparatus, the method comprising:

acquiring a correspondence between the load and an operating parameter of the motor, and acquiring an upper boundary threshold and a lower boundary threshold corresponding to the load;
collecting the operating parameter of the motor; identifying the load of the motor based on the operating parameter of the motor; and
based on the correspondence between the load and the operating parameter of the motor, increasing a performance parameter of the motor in response to the operating parameter being greater than the upper boundary threshold corresponding to the load, and decreasing the performance parameter of the motor in response to the operating parameter being smaller than the lower boundary threshold corresponding to the load.

**26.** The adaptive control method for the load of the motor according to claim 25, wherein the operating parameter of the motor comprises at least one of a duty ratio, a rotating speed, a current, or a power.

**27.** The adaptive control method for the load of the motor according to claim 25, wherein the performance parameter of the motor comprises at least one of a rotating speed, a current, a power, or a torque, and increasing or decreasing the performance parameter of the motor comprises: increasing or decreasing the power of the motor, increasing or decreasing the rotating speed of the motor, increasing or decreasing the current of the motor, and increasing or decreasing the torque of the motor.

**28.** The adaptive control method for the load of the motor according to claim 26, wherein the correspondence between the load and the operating parameter of the motor comprises a target control track curve.

**29.** The adaptive control method for the load of the motor according to claim 28, wherein the target control track curve comprises a track curve of the rotating speed varying with at least one of the duty ratio, the current or the power.

**30.** The adaptive control method for the load of the motor according to claim 28, wherein the target control track curve comprises a track curve of the current varying with at least one of the duty ratio or the rotating speed.

**31.** The adaptive control method for the load of the motor according to claim 28, wherein the target control track curve comprises a track curve of the power varying with at least one of the duty ratio or the rotating speed.

**32.** The adaptive control method for the load of the motor according to claim 28, wherein the target control track curve comprises a track curve of the torque varying with at least one of the duty ratio or the rotating speed.

**33.** The adaptive control method for the load of the motor according to claim 28, wherein in a process of acquiring the target control track curve of the correspondence between the load and the operating parameter of the motor, data is measured by using an open-loop pulse width modulation (PWM) control method when the operating parameter only comprises the duty ratio.

**34.** The adaptive control method for the load of the motor according to claim 28, wherein in a process of acquiring the target control track curve of the correspondence between the load and the operating parameter of the motor, data is measured by using a closed-loop control method when the operating parameter comprises at least one of the rotating speed, the current or the power.

**35.** The adaptive control method for the load of the motor according to claim 28, wherein during a process of increasing/decreasing the performance parameter of the motor, at least one of the operating parameter of the motor is controlled to move to a target point on the target control track curve by means of straight line fitting or curve fitting, to achieve target track curve control of the motor.

**31.** An outdoor working vehicle, comprising:

a vehicle frame;
a working mechanism attached to the vehicle frame, the working mechanism comprising a working motor and an output assembly configured to be driven by the working motor to perform a specific functional operation; and
a controller assembly configured to control an operation state of the working motor;

wherein:

the working motor has a plurality of operating parameters, and the controller assembly has a plurality of control strategies for the working motor, the plurality of control strategies correspondingly matching the plurality of operating parameters;

the controller assembly comprises a collection unit, an identification unit, a storage unit and a control unit;

the collection unit is configured to collect at least one of the operating parameters of the working motor during operation of the working motor;

the identification unit is configured to identify a load condition of the working motor based on the collected operating parameter;

the storage unit is configured to pre-store a correspondence between the operating parameters of the working motor and a load change and pre-store an upper boundary threshold and a lower boundary threshold of the operating parameter corresponding to a load; and

the control unit is configured to determine whether a detected actual load matches an actual operating parameter of the working motor based on the correspondence stored in the storage unit, and adjust performance parameters of the working motor by using a matched control strategy, in response to the actual operating parameter not falling within a range formed by a preset upper boundary threshold and a preset lower boundary threshold of the operating parameter corresponding to the actual load.

**32.** The outdoor working vehicle according to claim 31, wherein the plurality of operating parameters of the working motor comprise a duty ratio parameter, a rotating speed parameter, a current parameter, and a power parameter.

**33.** The outdoor working vehicle according to claim 32, wherein the performance parameters of the working motor comprise a rotating speed parameter, a current parameter, a power parameter, and a torque parameter.

**34.** The outdoor working vehicle according to claim 33, wherein the matched control strategy of the working motor comprises a rotating speed closed-loop control strategy, a current closed-loop control strategy, a power closed-loop control strategy, a torque closed-loop control strategy and an PWM duty ratio open-loop control strategy.

**35.** The outdoor working vehicle according to claim 34, wherein the storage unit is further configured to store a correspondence between the performance parameters and the operating parameters of the working motor.

**36.** The outdoor working vehicle according to claim 35, wherein the correspondence between the performance parameters and the operating parameters of the working motor comprises a correspondence between the rotating speed and the duty ratio, a correspondence between the rotating speed and the current, and a correspondence between the rotating speed and the power.

**37.** The outdoor working vehicle according to claim 35, wherein the correspondence between the performance parameters and the operating parameters of the working motor comprises a correspondence between the current and the duty ratio and a correspondence between the current and the rotating speed.

**38.** The outdoor working vehicle according to claim 35, wherein the correspondence between the performance parameters and the operating parameters of the working motor comprises a correspondence between the power and the duty ratio and a correspondence between the power and the rotating speed.

**39.** The outdoor working vehicle according to claim 35, wherein the correspondence between the performance parameters and the operating parameters of the working motor comprises a correspondence between the torque and the duty ratio and a correspondence between the torque and the rotating speed.

**40.** The outdoor working vehicle according to claim 36, wherein rotating speed points or torque points, and/or current points or torque points, and/or power points or torque points under different operating parameter states are selected for straight line fitting or curve fitting.

**41.** The outdoor working vehicle according to claim 37, wherein current points or torque points, and/or rotating speed points or rotating speed points under different operating parameter states are selected for straight line fitting or curve fitting.

**42.** The outdoor working vehicle according to claim 38, wherein power points or torque points, and/or rotating speed points or torque points under different operating parameter states are selected for straight line fitting or curve fitting.

**43.** The outdoor working vehicle according to claim 39, wherein rotating speed points or torque points, and/or power points or torque points under different operating parameter states are selected for straight line fitting or curve fitting.

**44.** The outdoor working vehicle according to claim 31, wherein the control unit is configured to increase the performance parameter of the working motor in response to determining that the actual operating parameter is greater than the upper boundary threshold corresponding to the load.

**45.** The outdoor working vehicle according to claim 31, wherein the control unit is configured to decrease the performance parameter of the working motor in response to determining that the actual operating parameter is smaller than the lower boundary threshold corresponding to the load.

**46.** The outdoor working vehicle according to claim 35, wherein the control unit is configured to, prior to determining whether the actual operating parameter falls within the range formed by the preset upper boundary threshold and the preset lower boundary threshold of the operating parameter corresponding to the actual load, determine whether the working motor is currently in a rotating speed adjusting process.

**47.** The outdoor working vehicle according to claim 46, wherein the control unit is configured to adjust the rotating speed by Proportional, Integral, Derivative Control (PID), in response to determining that the working motor is in the rotating speed adjusting process.

**48.** The outdoor working vehicle according to claim 46, wherein the control unit is configured to look up a table according to a current performance parameter of the working motor and determine an upper boundary and a lower boundary of the operating parameter of the working motor by linear interpolation calculation or direct function calculation, in response to determining that the working motor is not in the rotating speed adjusting process.

**49.** The outdoor working vehicle according to claim 31, wherein the collection unit, the identification unit, the control unit and the storage unit are integrated in a same single chip microcomputer (MCU).

```
                    ┌─────────────────────────────────────┐
                    │                Start                │
                    └─────────────────────────────────────┘
                                      │
                                      ▼
         ┌───────────────────────────────────────────────────────┐
         │      Acquiring a correspondence between the           │
         │   operating parameter and the load, and acquiring     │
         │      the upper boundary threshold and the lower       │
         │   boundary threshold corresponding to the load        │
         └───────────────────────────────────────────────────────┘
                                      │
                                      ▼
         ┌───────────────────────────────────────────────────────┐
         │     Collecting the operating parameter of the motor   │
         └───────────────────────────────────────────────────────┘
                                      │
                                      ▼
         ┌───────────────────────────────────────────────────────┐
         │          Identifying the load of the motor            │
         └───────────────────────────────────────────────────────┘
                                      │
                                      ▼
```

Whether the operating parameter is greater than an upper boundary threshold corresponding to the load

Y → Increasing a rotating speed of the motor

N

Whether the operating parameter is smaller than a lower boundary threshold corresponding to the load

Y → Decreasing the rotating speed of the motor

N

End

FIG. 1

- - - - Optimal torque adaptive curve after fitting

FIG. 2

---- Optimal torque adaptive curve after fitting

FIG. 3

FIG. 4

FIG. 5

FIG. 6

Start

↓

Acquiring a correspondence between the operating parameter and the load, and acquiring the upper boundary threshold and the lower boundary threshold corresponding to the load

↓

Collecting the operating parameter of the motor

↓

Identifying the load of the motor

↓

Whether the operating parameter is greater than an upper boundary threshold corresponding to the load ──Y──→ Increasing a current of the motor

↓N

Whether the operating parameter is smaller than a lower boundary threshold corresponding to the load ──Y──→ Decreasing the current of the motor

↓N

End

FIG. 7

FIG. 8

Optimal torque adaptive curve after fitting

FIG. 9

FIG. 10

```
                          ┌─────────────────────────────┐
                          │            Start            │
                          └──────────────┬──────────────┘
                                         ▼
            ┌────────────────────────────────────────────────────────┐
            │ Acquiring an adaptive control track of the load of      │
            │ the motor based on an operating parameter of the        │
            │ motor                                                   │
            └────────────────────────────┬───────────────────────────┘
                                         ▼
            ┌────────────────────────────────────────────────────────┐
            │ Acquiring a correspondence between the                  │
            │ operating parameter and the load, and acquiring         │
            │ an upper boundary threshold and a lower                 │
            │ boundary threshold corresponding to the load            │
            └────────────────────────────┬───────────────────────────┘
                                         ▼
            ┌────────────────────────────────────────────────────────┐
            │ Collecting the operating parameter of the motor         │
            └────────────────────────────┬───────────────────────────┘
                                         ▼
            ┌────────────────────────────────────────────────────────┐
            │ Identifying the load of the motor                       │
            └────────────────────────────┬───────────────────────────┘
                                         ▼
```

Whether the operating parameter is greater than the upper boundary threshold corresponding to the load

Y → Increasing a power of the motor

N

Whether the operating parameter is smaller than the lower boundary threshold corresponding to the load

Y → Decreasing the power of the motor

N

End

FIG. 11

FIG. 12

FIG. 13

FIG. 14

EP 4 738 685 A1

```
                    ┌─────────────────────────────────────────┐
                    │                  Start                  │
                    └─────────────────────────────────────────┘
                                        │
                                        ▼
                    ┌─────────────────────────────────────────┐
                    │   Acquiring a correspondence between the │
                    │ operating parameter and the load, and    │
                    │ acquiring the upper boundary threshold    │
                    │ and the lower boundary threshold          │
                    │ corresponding to the load                 │
                    └─────────────────────────────────────────┘
                                        │
                                        ▼
                    ┌─────────────────────────────────────────┐
                    │ Collecting the operating parameter of     │
                    │ the motor                                 │
                    └─────────────────────────────────────────┘
                                        │
                                        ▼
                    ┌─────────────────────────────────────────┐
                    │     Identifying the load of the motor     │
                    └─────────────────────────────────────────┘
```

Whether the operating parameter is greater than an upper boundary threshold corresponding to the load

Y → Increasing a torque of the motor

N

Whether the operating parameter is smaller than a lower boundary threshold corresponding to the load

Y → Decreasing the torque of the motor

N

End

FIG. 15

FIG. 16

- - - - - Optimal torque adaptive curve after fitting

FIG. 17

Optimal torque adaptive curve after fitting

FIG. 18

FIG. 19

```
                        ┌─────────────────────────────────────┐
                        │               Start                 │
                        └─────────────────────────────────────┘
                                         │
                                         ▼
        ┌─────────────────────────────────────────────────────┐
        │  Acquiring a correspondence between the load and     │
        │   an operating parameter of the motor, and           │
        │  acquiring an upper boundary threshold and a         │
        │  lower boundary threshold corresponding to the       │
        │                      load                            │
        └─────────────────────────────────────────────────────┘
                                         │
                                         ▼
        ┌─────────────────────────────────────────────────────┐
        │   Collecting the operating parameter of the motor    │
        └─────────────────────────────────────────────────────┘
                                         │
                                         ▼
        ┌─────────────────────────────────────────────────────┐
        │         Identifying the load of the motor            │
        └─────────────────────────────────────────────────────┘
```

Whether the operating parameter is greater than the upper boundary threshold corresponding to the load — Y → Increasing a performance parameter of the motor

N

Whether the operating parameter is smaller than the lower boundary threshold corresponding to the load — Y → Decreasing the performance parameter of the motor

N

End

FIG. 20

FIG. 21

FIG. 22

FIG. 23

## INTERNATIONAL SEARCH REPORT

| International application No. |
|---|
| **PCT/CN2024/102419** |

| A. | CLASSIFICATION OF SUBJECT MATTER |
|---|---|

H02P6/00(2016.01)i; H02P6/08(2016.01)i; H02P6/06(2006.01)i; A01D34/00(2006.01)i

According to International Patent Classification (IPC) or to both national classification and IPC

| B. | FIELDS SEARCHED |
|---|---|

Minimum documentation searched (classification system followed by classification symbols)

IPC:H02P,A01D

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电机, 电动机, 马达, 运行参数, 转速, 转矩, 电流, 占空比, 功率, 阈值, 负载, 负荷, 匹配, 对应, 映射, 割草机, 除草机, motor, operating parameter, speed, torque, current, duty cycle, power, threshold, load, matching, correspondence, mapping, lawn mower

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116846258 A (JIANGSU DONGCHENG TOOLS TECHNOLOGY CO., LTD.) 03 October 2023 (2023-10-03) claims 1-10, description, paragraphs [0059]-[0086], and figures 1-5 | 1-49 |
| PX | CN 116846261 A (JIANGSU DONGCHENG TOOLS TECHNOLOGY CO., LTD.) 03 October 2023 (2023-10-03) claims 1-10, description, paragraphs [0062]-[0093], and figures 1-7 | 1-49 |
| PX | CN 116846264 A (JIANGSU DONGCHENG TOOLS TECHNOLOGY CO., LTD.) 03 October 2023 (2023-10-03) claims 1-10, description, paragraphs [0067]-[0091], and figures 1-5 | 1-49 |
| PX | CN 116846283 A (JIANGSU DONGCHENG TOOLS TECHNOLOGY CO., LTD.) 03 October 2023 (2023-10-03) claims 1-10, description, paragraphs [0066]-[0088], and figures 1-6 | 1-49 |
| X | CN 106487286 A (POSITEC POWER TOOLS (SUZHOU) CO., LTD.) 08 March 2017 (2017-03-08) description, paragraphs [0077]-[0272], and figures 1-20 | 1-49 |

☑ Further documents are listed in the continuation of Box C. ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **18 October 2024** | **23 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2024/102419** |

### C. DOCUMENTS CONSIDERED TO BE RELEVANT

| Category* | Citation of document, with indication, where appropriate, of the relevant passages | Relevant to claim No. |
| --- | --- | --- |
| X | CN 109983907 A (POSITEC POWER TOOLS (SUZHOU) CO., LTD.) 09 July 2019 (2019-07-09)<br>description, paragraphs [0069]-[0100], and figures 1-11 | 1-49 |
| X | CN 203722531 U (SUZHOU KINGCLEAN PRECISION MACHINERY CO., LTD.) 16 July 2014 (2014-07-16)<br>description, paragraphs [0014]-[0020], and figures 1-3 | 1-49 |
| X | CN 204235514 U (HITACHI KOKI CO., LTD.) 01 April 2015 (2015-04-01)<br>description, paragraphs [0046]-[0309], and figures 1-29 | 1-49 |
| A | CN 111193455 A (HEBEI XINGBANG ELECTRIC POWER EQUIPMENT CO., LTD.) 22 May 2020 (2020-05-22)<br>entire document | 1-49 |
| A | CN 106576569 A (NANJING CHERVON INDUSTRY CO., LTD.) 26 April 2017 (2017-04-26)<br>entire document | 1-49 |
| A | CN 110572089 A (NANJING CHERVON INDUSTRY CO., LTD.) 13 December 2019 (2019-12-13)<br>entire document | 1-49 |
| A | EP 2832205 A1 (CLAAS SELBSTFAHRENDE ERNTEMASCHINEN GMBH) 04 February 2015 (2015-02-04)<br>entire document | 1-49 |
| A | US 2012227369 A1 (KUBOTA CORP.) 13 September 2012 (2012-09-13)<br>entire document | 1-49 |

Form PCT/ISA/210 (second sheet) (July 2022)

## INTERNATIONAL SEARCH REPORT
### Information on patent family members

International application No.

**PCT/CN2024/102419**

| Patent document cited in search report | | | Publication date (day/month/year) | Patent family member(s) | | | Publication date (day/month/year) |
|---|---|---|---|---|---|---|---|
| CN | 116846258 | A | 03 October 2023 | None | | | |
| CN | 116846261 | A | 03 October 2023 | None | | | |
| CN | 116846264 | A | 03 October 2023 | None | | | |
| CN | 116846283 | A | 03 October 2023 | None | | | |
| CN | 106487286 | A | 08 March 2017 | WO | 2017036401 | A1 | 09 March 2017 |
| CN | 109983907 | A | 09 July 2019 | None | | | |
| CN | 203722531 | U | 16 July 2014 | None | | | |
| CN | 204235514 | U | 01 April 2015 | US | 2014352995 | A1 | 04 December 2014 |
| | | | | DE | 202014102422 | U1 | 08 August 2014 |
| | | | | JP | 2014233793 | A | 15 December 2014 |
| | | | | JP | 2015024486 | A | 05 February 2015 |
| CN | 111193455 | A | 22 May 2020 | None | | | |
| CN | 106576569 | A | 26 April 2017 | EP | 3155887 | A1 | 19 April 2017 |
| | | | | CA | 2945013 | A1 | 14 April 2017 |
| | | | | AU | 2016101803 | A4 | 17 November 2016 |
| | | | | US | 2017105339 | A1 | 20 April 2017 |
| CN | 110572089 | A | 13 December 2019 | None | | | |
| EP | 2832205 | A1 | 04 February 2015 | DE | 102013108208 | A1 | 05 February 2015 |
| US | 2012227369 | A1 | 13 September 2012 | US | 2015289444 | A1 | 15 October 2015 |
| | | | | JP | 2012187025 | A | 04 October 2012 |

Form PCT/ISA/210 (patent family annex) (July 2022)